# EUROPEAN PATENT APPLICATION

(11) **EP 2 582 168 A1**
(43) Date of publication of application: **17.04.2013**
(21) Application number: 11792215.3
(22) Date of filing: 01.04.2011
(51) Int. Cl.: H04W 16/28, H04W 88/02

(54) **WIRELESS COMMUNICATION SYSTEM AND TERMINAL APPARATUS**

(30) Priority: 08.06.2010 JP 2010131413
(71) Applicant: Mitsubishi Electric Corporation, Tokyo 100-8310 (JP)
(72) Inventor: HARA, Yoshitaka, Tokyo 100-8310 (JP)
(74) Representative: Pfenning, Meinig & Partner GbR
(86) International application number: PCT/JP2011/058465
(87) International publication number: WO 2011/155257

(57) **Abstract**

There is provided a radio communication system includes a radio station, a host apparatus configured to subordinate the radio station, and a terminal configured to communicate with the radio station. The terminal has a function of transmitting data to the host apparatus through a plurality of the radio stations and, when data is transmitted through the radio stations, executes a first transmitting operation for transmitting different data portions respectively to the radio stations, which are set as transmission destinations, or a second transmitting operation for transmitting same data respectively to the radio stations, which are set as the transmission destinations.

## Description

### Field

The present invention relates to a radio communication system in which a plurality of communication apparatuses transmit a signal in association with one another.

### Background

In recent years, there is a request for construction of a high-speed radio communication system according to an increasing demand for high-speed communication. As one technology for improving radio transmission speed, a technology in which a plurality of radio stations performs signal transmission in association with one another has been known.

As a representative technology in the past in which a plurality of radio stations perform signal reception in association with one another, a soft handover technology has been known. As a literature in which the soft handover technology is described, there is Patent Literature 1 described below. In soft handover, a mobile terminal transmits the same data to a plurality of base stations.

### Citation List

### Patent Literature

Patent Literature 1: Japanese Patent Application Laid-open No. 2006-311402

### Summary

### Technical Problem

In the soft handover in the past, the mobile terminal transmits the same data to the base stations. However, a method of transmitting the same data does not always have high radio transmission efficiency. Therefore, it is desirable to realize a soft handover technology with higher radio transmission efficiency.

For example, when a terminal is configured to transmit different data portions to a plurality of base stations, improvement of radio transmission efficiency can be expected. However, to configure the terminal to transmit the different data portions to the base stations, a method of determining the data portions transmitted to the base stations by the terminal and a method of sharing information concerning data division between the terminal and the base stations (information concerning the data portions transmitted to the base stations) are necessary.
A method for efficiently transmitting and receiving the information is also necessary.

When a terminal transmits different data portions to a plurality of base stations, a different delay sometimes occurs for each of radio links according to a traffic state and a state of an inter-base station connection link. In this case, a configuration and a control method for performing control such that the data portions transmitted from the terminal to the base stations substantially simultaneously arrive at an apparatus that integrates the data portions are necessary.

In radio transmission in which a terminal transmits different data portions to a plurality of base stations, a connection state of a part of links between the terminal and the base stations is sometimes suddenly deteriorated. Therefore, it is desirable to realize a configuration that can maintain communication quality even in such a case.

It is also desirable to realize a configuration that can flexibly perform associated control when a terminal performs handover between cells.

When a terminal and partner base stations to which the terminal transmits different data during handover include a plurality of antennas, it is desirable to realize a configuration that determines the number of multiple signals in a range in which the terminal can spatially multiplex signals.

Further, when a terminal is configured to transmit different data portions to a plurality of base stations during handover in cellular radio communication, it is desirable to realize a configuration that can perform function extension while keeping functions of a 3GPP (Third Generation Partnership Project)-LTE (Long Term Evolution) system, which is an international standard system.

The present invention has been devised in view of the above and it is an object of the present invention to obtain a radio communication system and a terminal apparatus that can realize, when a terminal such as a mobile station transmits data to a plurality of radio stations such as radio base stations, data transmission efficiency higher than the data transmission efficiency in the past.

### Solution to Problem

To solve the above problems and achieve an object, there is provided a radio communication system according to the present invention including: a radio station; a host apparatus configured to subordinate the radio station; and a terminal configured to communicate with the radio station, wherein the terminal has a function of transmitting data to the host apparatus through a plurality of the radio stations and, when data is transmitted through the radio stations, executes a first transmitting operation for transmitting different data portions respectively to the radio stations, which are set as transmission destinations, or a second transmitting operation for transmitting same data respectively to the radio stations, which are set as the transmission destinations.

### Advantageous Effects of Invention

According to the present invention, there is an effect that it is possible to select an appropriate data transmission procedure according to a state of a radio link between the radio stations that perform an associated operation and receive data and the terminal on the data transmission side and efficiently perform data transmission. Brief Description of Drawings

FIG. 1 is a diagram of a configuration example and an operation overview of a radio communication system according to a first embodiment.
FIG. 2 is a sequence chart for explaining an associated control procedure in the first embodiment.
FIG. 3 is a diagram of an example of an operation for allocating sequence numbers to divided data.
FIG. 4 is a diagram of an example of an operation for transmitting data from a terminal to associating radio stations.
FIG. 5 is a diagram of an example of the operation for transmitting data from the terminal to the associating radio stations.
FIG. 6 is a diagram of a configuration example of a radio station in the first embodiment.
FIG. 7 is a diagram of a configuration example of a terminal in the first embodiment.
FIG. 8 is a diagram of an example of a control signal for instructing a data dividing method.
FIG. 9 is a diagram of an example of a data dividing operation.
FIG. 10 is a diagram of an example of a control signal transmitted from the associating radio station to the terminal together with the divided data.
FIG. 11 is a diagram of an example of an operation for combining received data on a radio station side.
FIG. 12A is a diagram of an example of a control signal transmitted by a main radio station when three associating radio stations are present.
FIG. 12B is a diagram for explaining a relation between divided portions and the numbers of bits of the divided portions when the number of division N is 3.
FIG. 13 is a diagram of an operation for dividing and transmitting data in the terminal when the number of bits of data is changed in every transmission.
FIG. 14 is a diagram of an operation for integrating data on the associating radio station side when the number of bits of data changes in every transmission.
FIG. 15 is a diagram of an example of retransmission control in a radio communication system according to a third embodiment.
FIG. 16 is a sequence chart for explaining a retransmission control operation in the radio communication system according to the third embodiment.
FIG. 17 is a diagram for explaining a retransmission operation by a radio station in the third embodiment.
FIG. 18 is a diagram of an example of a method of defining data portions.
FIG. 19 is a diagram of an example of a transmission control operation in a radio communication system according to a fourth embodiment.
FIG. 20 is a sequence chart for explaining an example of the transmission control operation in the fourth embodiment.
FIG. 21 is a diagram of an example of an operation for notifying control information concerning a data division ratio for each of frames.
FIG. 22 is a diagram of an example of a method in which an associating radio station notifies a terminal station of the data division ratio.
FIG. 23 is a diagram of an example of a correspondence table between the data division ratio and an index number.
FIG. 24 is a sequence chart for explaining an associated control procedure in a sixth embodiment.
FIG. 25 is a diagram of an example of a control signal transmitted to associating radio stations by a terminal when two associating radio stations are present.
FIG. 26 is a diagram of an example of control for selecting which of associated control led by the associating radio station and associated control led by the terminal is carried out.
FIG. 27 is a diagram of an example of control for selecting which of the associated control led by the associating radio station and the associated control led by the terminal is carried out.
FIG. 28 is a diagram of an operation for measuring a relative delay between the associating radio stations.
FIG. 29 is a sequence chart for explaining the operation for measuring a relative delay.
FIG. 30 is a diagram for explaining an associated transmission operation in a radio communication system according to an eighth embodiment.
FIG. 31 is a diagram for explaining an associated transmission operation in a radio communication system according to a ninth embodiment.
FIG. 32 is a diagram of an example of a table showing a correspondence relation between a division ratio and a maximum number of layers for each of associating radio stations.
FIG. 33 is a diagram for explaining associated transmission control in the radio communication system according to the ninth embodiment.
FIG. 34 is a diagram of an example of a form of use of the associated transmission disclosed in the first to ninth embodiments.
FIG. 35 is a flowchart for explaining a transmission mode selection procedure in an associating radio station.
FIG. 36 is a diagram of the configuration and an operation overview of a radio communication system according to a twelfth embodiment.
FIG. 37A is a diagram of an example of a correspondence relation between antennas included in a terminal and an antenna group to which the antennas belong.
FIG. 37B is a diagram of the configuration of a terminal including a plurality of antennas.
FIG. 38A is a diagram of an example of a correspondence relation between antennas included in a terminal and an antenna group to which the antennas belong.
FIG. 38B is a diagram of the configuration of a terminal including a plurality of antennas.
FIG. 39 is a diagram of a protocol stack of a user plane in an LTE system.
FIG. 40 is a diagram of a protocol stack for applying the associated transmission controls explained in the first to twelfth embodiments to a 3GPP LTE system.
FIG. 41 is a diagram of a configuration example of a terminal in a thirteenth embodiment.
FIG. 42 is a diagram of a configuration example of a base station in the third embodiment.

### Description of Embodiments

Embodiments of a radio communication system and a terminal apparatus according to the present invention are explained in detail based on the drawings. The present invention is not limited by the embodiments.

In the embodiments explained below, a method is disclosed in which a terminal located in a place where the terminal can communicate with a plurality of radio stations transmits data to two or more radio stations and the radio stations receive, in association with one another, the data transmitted from the terminal. In the explanation of the embodiments, terms "base station" and "terminal" are sometimes used. However, a data transmission method disclosed herein can be applied to any radio station other than the "base station" and the "terminal". In the explanation of the embodiments, a radio station that receives, in association with other radio station(s), data transmitted from a certain terminal is referred to as "associating radio station".

### First Embodiments

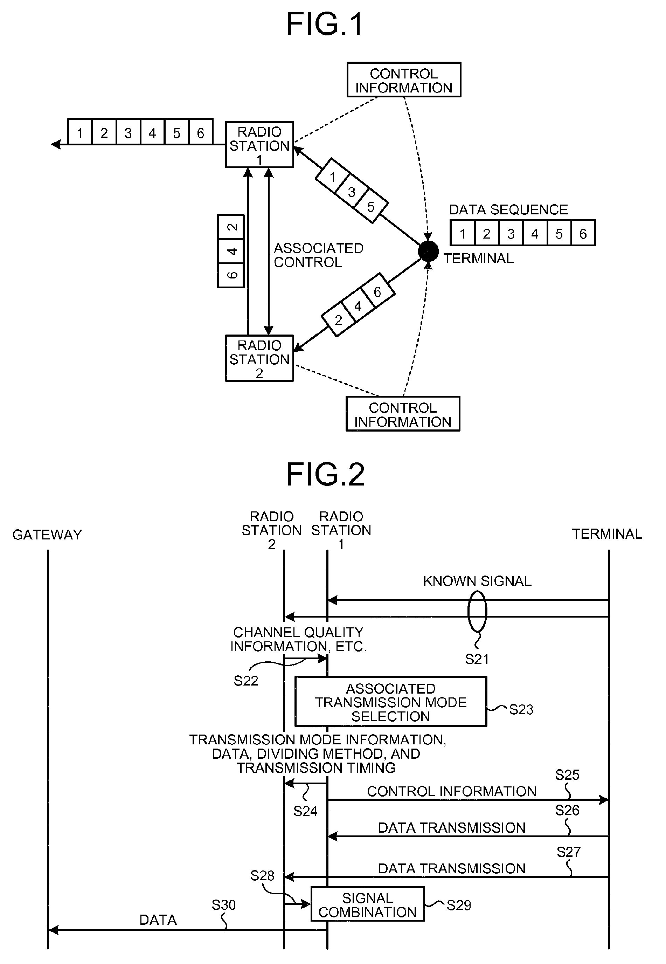

FIG. 1 is a diagram of a configuration example and an operation overview of a radio communication system according to a first embodiment. As shown in the figure, the radio communication system according to this embodiment includes a plurality of radio stations (radio stations 1 and 2) and a terminal. The radio stations 1 and 2 are, for example, base stations of a cellular radio communication system. The terminal is a mobile station.

In FIG. 1, an example is shown in which the terminal is located in a place where the terminal can communicate with the radio stations 1 and 2. Although not shown in the figure, the radio stations 1 and 2 are subordinate to a host apparatus such as a gateway connected to a host network. A direction from the terminal to the radio station side is referred to as uplink direction. When data is transmitted from the terminal to the host network (the radio station side) in such a state, the terminal divides data to be transmitted and transmits data portions different to each other to the plurality of radio stations 1 and 2, respectively. When the radio stations 1 and 2 receive the different data portions, the received data portions are transferred from one radio station to the other radio station in a wire network. The radio station that receives the data portions transferred from the other radio station integrates the data portions directly received from the subordinate terminal and the data portions received through the other radio station. For example, as shown in the figure, the radio station 2 transfers the data portions and the radio station 1 integrates the data portions. In this way, the radio communication system according to this embodiment is characterized in that one terminal divides data and transmits different data portions to a plurality of radio stations. For convenience, in FIG. 1, only the radio stations 1 and 2 that receive, in association with each other, uplink data transmitted by the terminal shown in the figure are shown. However, actually, other radio stations that do not perform the associated reception are also included in the radio communication system. The radio stations that perform the associated reception (associating radio stations) are determined before the terminal starts the transmission of the uplink data. The associating radio stations can be determined either by the transmission side (the terminal) or the reception side (the radio stations) of the uplink data. A method of determining the associating radio stations is not particularly specified.

When the terminal transmits the different data portions to the radio terminals, the terminal can signal-transmit, using a transmission beam, with strong electric power, the data portions to the radio stations that receive the data portions. With such a method, it is possible to transmit the data portions to the reception radio stations with strong electric power. Because the different data are transmitted, it is possible to effectively utilize two radio links and attain a high communication capacity.

FIG. 2 is a sequence chart for explaining an associated control procedure in this embodiment. In FIG. 2, a sequence example in executing the operation shown in FIG. 1, i.e., a sequence example in which the terminal transmits the uplink data to the radio stations 1 and 2, which are the associating radio stations, and the data received from the terminal by the radio stations 1 and 2 are integrated by the radio station 1 is shown.

In association control shown in FIG. 2, first, the terminal transmits a signal for channel quality measurement (a known signal or a sounding signal) to the associating radio stations (the radio stations 1 and 2) (step S21). The radio stations 1 and 2 measure channel quality. Subsequently, the radio station 2 notifies the radio station 1 of channel quality information, which is a measurement result of the channel quality (step S22). The radio station 1 selects, based on the channel quality measured by the radio station 1 (the channel quality from the terminal to the radio station 1) and the channel quality information notified from the radio station 2 (the channel quality from the terminal to the radio station 2), an associated transmission mode suitable for transmission from the terminal out of a plurality of associated transmission modes determined in advance (step S23). The radio station 1 notifies the radio station 2 of the selected associated transmission mode and related information of the associated transmission mode (information concerning transmission timing from the terminal to the associating radio stations and a data dividing method) (step S24) and transmits the related information to the terminal as control information (step S25). Upon receiving the control information transmitted at step S25, the terminal divides data according to the control information and transmits data portions obtained by dividing the data to the radio stations 1 and 2, respectively (steps S26 and S27). Upon receiving the divided data portions, the radio station 2 transmits the data to the radio station 1 (step S28). The radio station 1 integrates (combines) the data portions directly received from the terminal and the data portions received from the radio station 2 to thereby construct the entire data (step S29). The data obtained by integrating the data portions is transmitted from the radio station 1 to a destination of the data through a gateway (step S30).

In the explanation in this embodiment, for simplification, the radio stations (the associating radio stations) that receive the uplink data from the terminal in association with each other are two stations. However, the same control can be applied when the associating radio stations are three or more stations. Specifically, any one of the associating radio stations selects an associated transmission mode based on a measurement result of channel quality in the associating radio stations, and notifies the other associate radio stations and the terminal of a selection result and related information of the selection result. The terminal and the associating radio stations perform data transmission according to the selected associated transmission mode. In the following explanation, among a plurality of associating radio stations, an associating radio station that acquires a channel quality measurement result from the other associating radio stations and selects an associated transmission mode is referred to as "main radio station" or "main associating radio station". The other associating radio stations are referred to as "sub-radio stations" or "sub-associating radio stations".

As a preferred form of the associated transmission mode selection at step S23, a form of selecting an associated transmission mode out of two modes explained below is particularly effective.

### Transmission mode A: divided data transmission mode

The terminal divides data and transmits different data portions (divided data) to the associating radio stations.
Transmission mode B: same data transmission mode
The terminal transmits the same data to both of the associating radio stations.

The transmission mode A is particularly effective when the terminal can form transmission beams using a plurality of antennas. This is because, when the terminal uses a transmission beam, it is possible to transmit a signal with strong electric power only in the direction of a radio station that receives data. Because it is possible to reduce interference with the other radio stations, it is possible to establish a radio link independently for each of the radio stations using different transmission beams and realize high radio transmission efficiency. To perform appropriate transmission beam formation, a state in which a time change of a channel state is small is desirable. Therefore, the transmission mode A is particularly effective when the moving speed of the terminal is low and a change in a channel is small.

On the other hand, the transmission mode B is particularly effective when the terminal uses a single antenna and when the terminal is moving at high speed. In this case, a channel environment of the terminal tends to change. The associating radio stations sometimes cannot receive the data accurately. However, the associating radio stations receive the same data, whereby it is possible to obtain a diversity effect.

When the transmission mode A (the divided data transmission mode) is used, the radio station 1 notifies the radio station 2 of a method of allocating sequence numbers to the divided data. As the method of allocating sequence numbers to the data, there are mainly two methods explained below.

### Divided allocation of sequence numbers

A series of sequence numbers are divided and granted to data portions to be transmitted to the radio stations from the terminal.
Parallel allocation of sequence numbers
Sequence numbers are independently granted to data portions to be transmitted to the radio stations.

When the associated sequence number allocation is used, compared with the use of the independent sequence number allocation, transmission processing (division of data, grant of sequence numbers, and the like) in the transmission side (the terminal) is complicated. However, a processing load on combining work for the data portions on the reception side (the associating radio station side) is small. On the other hand, when the independent sequence number allocation is used, the processing on the transmission side is not complicated. However, the combination processing on the reception side is complicated and the processing load increases. The associated sequence number allocation or the independent sequence number allocation to be used can be fixed in the system or can be adaptively selected according to states (load states, etc.) of the radio stations and the terminal.

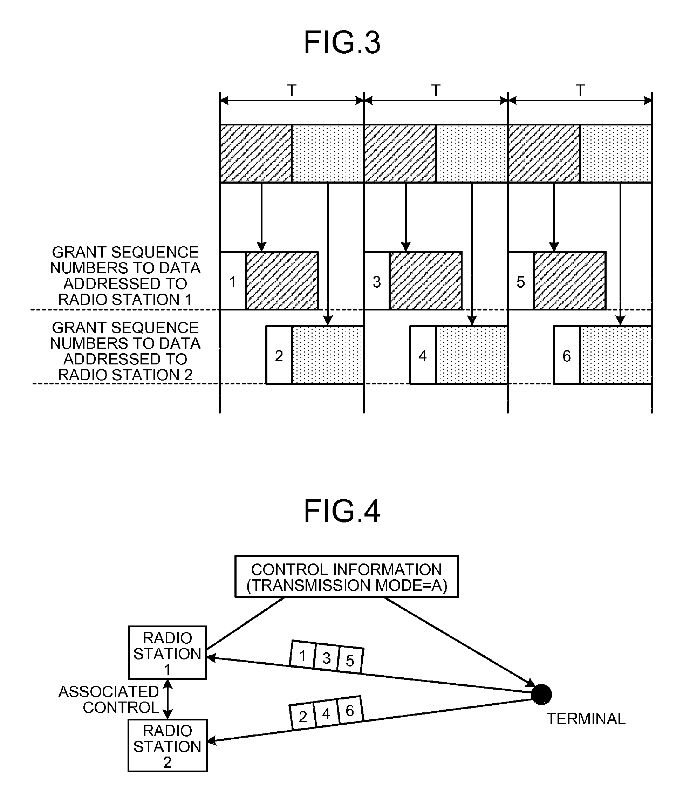

FIG. 3 is a diagram of an example of an operation for allocating sequence numbers to the divided data. In FIG. 3, an operation example in using the divided allocation of sequence numbers is shown. In the example shown in the figure, the terminal divides entire data into six and allocates sequence numbers 1 to 6 to data portions. The terminal extracts data portions transmitted to the associating radio stations out of the data portions and transmits the data portions. As shown in the figure, sequence numbers are written in header portions of the divided data, whereby it is possible to allocate the sequence numbers to the data portions.

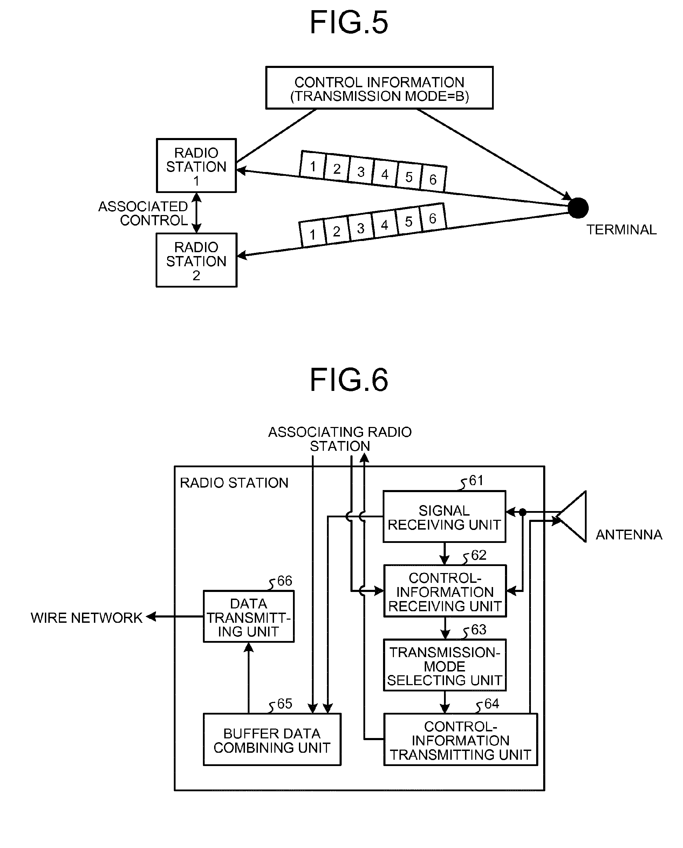

FIGS. 4 and 5 are diagrams of an example of a data transmission operation from the terminal to the associating radio stations. In FIGS. 4 and 5, specific examples of control information and data to be transmitted from the terminal to the associating radio stations are shown. An operation performed when the transmission mode A is used is shown in FIG. 4. An operation performed when the transmission mode B is used is shown in FIG. 5. In the operations shown in FIGS. 4 and 5, first, the radio station 1 (the main radio station) transmits, to the terminal, as control information, information for identifying a radio resource used for data transmission and a transmission mode (the transmission mode A or B) of the radio resource and information concerning a method of allocating sequence numbers. Subsequently, the terminal that receives the control information identifies the transmission mode (the transmission mode A or B) and the method of allocating sequence numbers and transmits data in a specified radio resource position. A large number of methods of specifying a radio resource using a control signal have been known. Any method among the methods can be used.

FIG. 6 is a diagram of a configuration example of the radio station in this embodiment. The configuration shown in FIG. 6 can be applied to both the radio stations 1 and 2 (the main radio station and the sub-radio station).

The radio station according to this embodiment includes, as shown in FIG. 6, a signal receiving unit 61 configured to receive a signal for channel quality measurement and data transmitted from the terminal, a control-information receiving unit 62 configured to receive control information transmitted from the terminal, a transmission-mode selecting unit 63 configured to select an associated transmission mode, a control-information transmitting unit 64 configured to transmit the control information to the terminal and the associating radio station, a buffer data combining unit 65 configured to retain data directly received from the terminal and, when the own station operates as the main radio station, combine data received from the other associating radio station (the sub-radio station) and the data directly received from the terminal, and a data transmitting unit 66 configured to transmit the data to a wire network.

A transmission mode determining operation and a data receiving operation performed when the radio station shown in FIG. 6 is the main associating radio station are explained.

In the transmission mode determining operation, first, the signal receiving unit 61 receives a known signal or a sounding signal from the terminal and measures channel quality of a radio link to the terminal. The control-information receiving unit 62 receives channel quality information indicating a channel quality measurement result of the radio link from the signal receiving unit 61 and passes the channel quality information to the transmission-mode selecting unit 63. Further, when a channel quality measurement result (channel quality information) of a radio link in the sub-associating radio station is transmitted to the radio station, the signal receiving unit 62 receives the channel quality measurement result. The transmission-mode selecting unit 63 selects a transmission mode based on first channel quality information indicating the channel quality measurement result by the signal receiving unit 61 and second channel quality information received from the sub-associating radio station by the control-information receiving unit 62. The control-information transmitting unit 64 receives a selection result (the selected transmission mode) from the transmission-mode selecting unit 63 and transmits information indicating the transmission mode selected by the transmission-mode selecting unit 63 and other related control information to the terminal and the associating radio stations.

In a data receiving operation after the execution of the transmission mode determining operation, the signal receiving unit 61 receives specific data portions from the terminal according to the selection result in the transmission-mode selecting unit 63. The received data portions are passed to the buffer data combining unit 65. The buffer data combining unit 65 integrates the data portions received from the signal receiving unit 61 and another data portion transferred from the other associating radio station (the sub-associating radio station). The integrated data is transmitted to the wire network from the data transmitting unit 66.

The transmission mode determining operation and the data receiving operation performed when the radio station shown in FIG. 6 is the sub-associating radio station are explained.

In the transmission mode determining operation, first, the signal receiving unit 61 receives a known signal or a sounding signal from the terminal and measures channel quality of a radio link to the terminal. The control-information transmitting unit 64 receives channel quality information indicating a channel quality measurement result of a radio link in the signal receiving unit 61 via the control-information receiving unit 62 and the transmission-mode selecting unit 63 and transmits the channel quality information to the other associating radio station (the main associating radio station). Thereafter, the control-information receiving unit 62 receives a selection result of a transmission mode in the main associating radio station (information indicating a selected transmission mode and other related control information) from the main associating radio station.

In the data receiving operation, after the execution of the transmission mode determining operation, the signal receiving unit 61 receives, according to the selection result of the transmission mode in the main associating radio station received by the control-information receiving unit 62, specific data portions from the terminal. The received data portions are passed to the buffer data combining unit 65. The buffer data combining unit 65 transfers the data portions received from the signal receiving unit 61 to the main associating radio station.

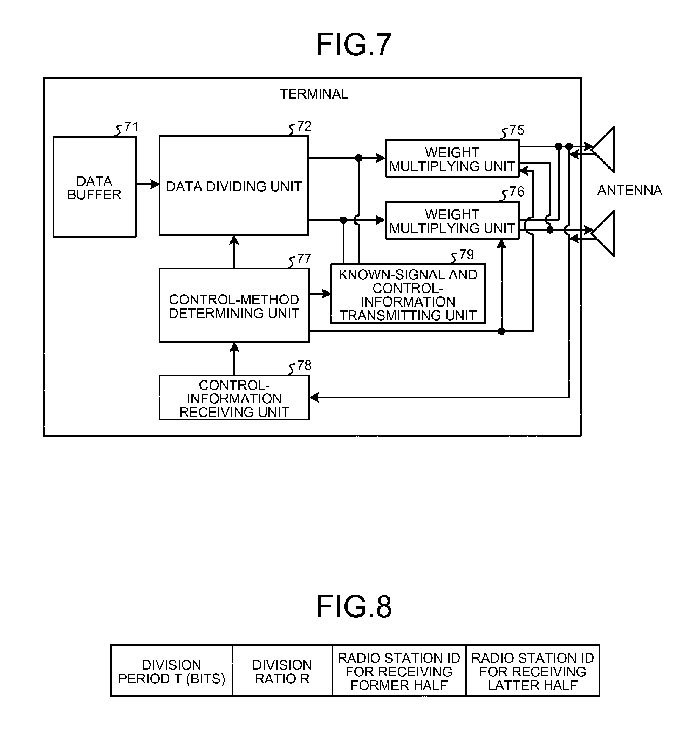

FIG. 7 is a diagram of a configuration example of the terminal in this embodiment. The terminal in this embodiment includes, as shown in FIG. 7, a data buffer 71 configured to retain uplink data, a data dividing unit 72 configured to divide the data retained by the data buffer 71 into blocks having predetermined length (a predetermined number of bits), weight multiplying units 75 and 76 configured to multiply an input signal with weight, a control-method determining unit 77 configured to determine, according to a transmission mode determination result in the associating radio station, a method of dividing transmission data, and a control-information receiving unit 78 configured to receive control signal transmitted from the radio stations. In the terminal having the configuration shown in FIG. 7, the data dividing unit 72 and the weight multiplying units 75 and 76 configure data transmission processing means. A known-signal and control-information transmitting unit 79 and the weight multiplying units 75 and 76 configure signal-for-channel-measurement transmission processing means.

An operation performed when the terminal shown in FIG. 7 transmits uplink data is explained. First, in the terminal, to cause the associating radio station side to determine a transmission mode, the known-signal and control-information transmitting unit 79 generates a known signal. The weight multiplying units 75 and 76 perform weight multiplication for each of antennas according to necessity and then transmit the known signal from the antennas to the associating radio stations. The weight multiplication is multiplication for performing transmission beam formation or pre-coding. When the transmission beam formation or the pre-coding is not used, the weight multiplying units do not always have to perform the weight multiplication. Thereafter, the control-information receiving unit 78 receives control information indicating a transmission mode determination result on the associating radio station side (information indicating a selected transmission mode and other related control information) from the main associating radio station. Subsequently, the control-method determining unit 77 decodes the received control information and determines a data dividing method. When the control-method determining unit 77 determines the data dividing method, the data dividing unit 72 divides, according to a determination result, uplink data stored in the data buffer 71 and generates data portions (data blocks) to be transmitted to the associating radio stations. The weight multiplying units 75 and 76 perform the weight multiplication for each of the antennas according to necessity and then transmits data from the antennas to the associating radio stations. It is also possible that the data dividing unit 72 outputs all the data to one weight multiplying unit (does not perform data division).

As explained above, this embodiment is characterized in that, when two or more radio stations receive transmission data from a terminal in association with one another, the terminal divides data to be transmitted and transmits a part of the data to specific radio stations. With such a configuration, it is possible to transmit different data portions to a plurality of radio stations and improve signal transmission efficiency in data transmission performed using a plurality of radio links. A main radio station among the associating radio stations selects, based on channel quality of radio links between the associating radio stations and the terminal, an appropriate transmission mode from the transmission mode A in which the terminal transmits divided data to the radio stations and the transmission mode B in which the terminal transmits the entire data to the radio stations. The main radio station notifies the other radio station(s) (the sub-radio station(s)) and the terminal of the transmission mode to be used (the selected transmission mode) as control information. With this method, it is possible to perform appropriate data transmission corresponding to an environment. The terminal divides data according to a sequence number allocating method determined between the associating radio stations and the terminal, grants sequence numbers to data portions, and transmits the data portions. Therefore, on the associating radio station side, it is possible to integrate the data portions received from the terminal. In particular, when the divided allocation method for sequence numbers is used, in the associating radio station (the main radio station) that integrates the data portions, it is possible to integrate the data from the terminal according to simple order rearrangement based on the sequence number. When the parallel allocation method for sequence numbers is used, the terminal can transmit a plurality of divided data to different radio stations using sequence number allocation same as that in the configuration in the past. Therefore, it is possible to realize associated data reception among the radio stations while minimizing a function change to the radio station in the past.

### Second Embodiment

In an explanation of a second embodiment, in the data transmission (the associated transmission control) explained in the first embodiment, sequence numbers are allocated to data portions in parallel.

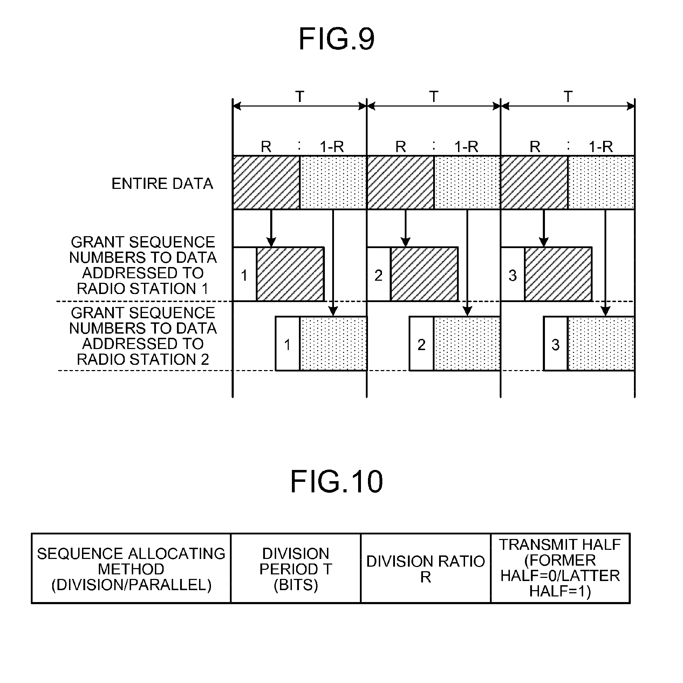

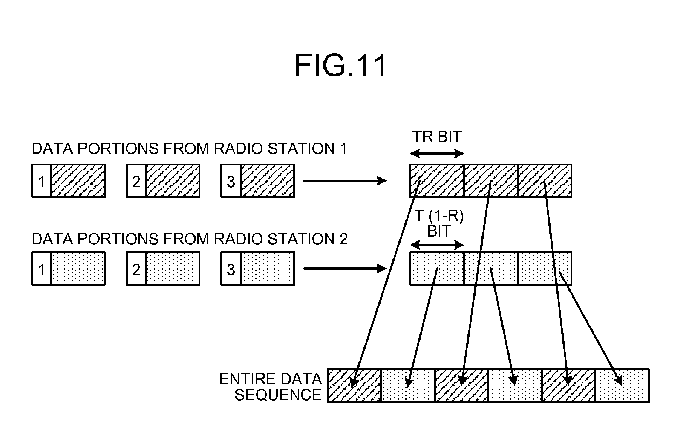

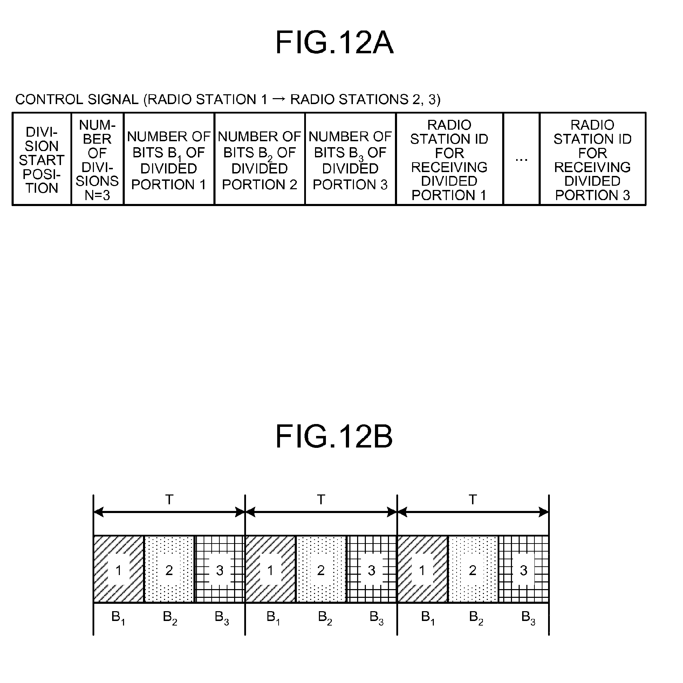

In the explanation in this embodiment, FIGS. 8 to 14 are used. FIG. 8 is a diagram of an example of a control signal for instructing a data dividing method. FIG. 9 is a diagram of an example of a data dividing operation. FIG. 10 is a diagram of an example of a control signal transmitted from an associating radio station to a terminal together with divided data. FIG. 11 is a diagram of an example of an operation for combining received data on a radio station side. FIG. 12A is a diagram of an example of a control signal for instructing a data dividing method.

When data transmission is performed using the transmission mode A (the divided data transmission mode) and the parallel allocation of sequence numbers in the radio communication system explained in the first embodiment, first, the main radio station (the radio station 1) transmits the control signal shown in FIG. 8 to the sub-radio station (the radio station 2) and the terminal. The transmission to the sub-radio station is performed via a wire network (a wire transmission line) and the transmission to the terminal is performed via a radio link (a radio transmission line). The control signal includes, as control information, a division period T (bits), a division ratio R, a radio station ID for receiving the former half, and a radio station ID for receiving the latter half. The sub-radio station and the terminal that receive the control signal shown in FIG. 8 grasp the division period T and the division ratio R and decode the radio station ID for receiving the former half and the radio station ID for receiving the latter half. As a result, the sub-radio station recognizes data portions for reception. The terminal recognizes data dividing method and a radio station at a transmission destination of divided data of the data (divided portions of the data).

When the terminal recognizes control contents, the terminal divides the entire data at a period of T bits and divides the T bits at a ratio of R:1-R. The terminal adds headers, to which serial sequence numbers are granted, to divided data to be received by specific radio stations among divided data obtained by dividing the data, and transmits the divided data. In FIG. 10, an example of a control signal transmitted from the terminal to the associated terminal stations (the radio stations 1 and 2) together with the divided data is shown. The control signal includes information (a sequence allocating method) indicating a sequence number allocating method (division or parallel), the division period T (bits), the division radio R, and information concerning transmission portions. The "transmission portions" are information indicating data portions (the former half or the latter half), which are transmitted by the terminal to the radio stations that receive the control signal shown in FIG. 10. The "transmission portions" can be considered information, which indicates data portions to be received by the radio stations that receive the control signal. The associating radio stations receive the control signal to thereby recognize the sequence number allocating method and the data dividing method. The terminal receives the control signal (the control signal shown in FIG. 8) from the main radio station. However, it is also likely that the terminal does not follow (cannot follow) contents of the control signal received from the main radio station. Therefore, the terminal transmits the control signal concerning the data dividing method (the control signal shown in FIG. 10) to the associating radio stations. Even if the terminal always follows the control signal from the main radio station, it is also likely that the terminal cannot correctly receive the control signal in a down link. Therefore, the terminal transmits the control signal concerning the data dividing method to the associating radio stations, whereby the associating radio stations can confirm that the terminal is correctly executing data division.

Upon receiving the divided data transmitted from the terminal, the associating radio stations (the radio stations 1 and 2) combine the divided data according to a procedure shown in FIG. 11. Specifically, the main radio station arranges, in sequence number order, the divided data directly received from the terminal and combines the divided data. Similarly, the main radio station arranges, in sequence number order, the divided data transferred from the sub-radio station and combines the divided data. The main radio station checks information included in the control signal transmitted together with the divided data and grasps the division period T and the division ratio R of the received data. Therefore, subsequently, the main radio station divides the combined data for each fixed number of bits and alternately arranges data portions received by the associating radio stations. In an example shown in FIG. 11, data obtained by combining data portions received by the radio station 1 (transmission data portions to the radio station 1) is divided for each TR bits (TxR bits). On the other hand, data obtained by combining data portions received by the radio station 2 is divided for each T (1-R) bit. According to such a method, the main radio station can integrate the data.

In the explanation referring to FIGS. 8 to 11, association of the two radio stations is assumed. However, the same concept can be extended to association of three or more radio stations. As an example, associated data reception by three radio stations 1 to 3 is explained. FIG. 12A is a diagram of a control signal used when associating radio stations are three stations (a control signal transmitted from a main radio station to sub-radio stations and a terminal). When the radio station 1 is the main radio station, the radio station 1 determines a transmission mode. When the transmission mode A is selected, the radio station 1 transmits a control signal shown in FIG. 12A to the radio stations 2 and 3, which are sub-radio stations, and the terminal that is about to transmit data. The control signal includes the number of divisions N of data, the number of bits B1 of a first divided portion (a divided portion 1), the number of bits B2 of a second divided portion (a divided portion 2), the number of bits B3 of a third divided portion (a divided portion 3), and radio station IDs for receiving the divided portions. In FIG. 12B, as an example, a relation between divided portions and the numbers of bits of the divided portions at the time when the number of divisions N is 3 is shown. The sub-radio stations (the radio stations 2 and 3) and the main radio station (the radio station 1) that receive the control signal check control information included in the control signal to thereby grasp divided portions to be received by the radio stations. The terminal checks control information included in the control signal received from the main radio station to thereby grasp a dividing method and associating radio stations at transmission destinations of the divided data. The terminal performs division of uplink data and transmission of the divided data to the associating radio stations according to the control signal shown in FIG. 12A. The associating radio stations receive, according to the control signal shown in FIG. 12A, the divided data transmitted from the terminal. Further, the sub-radio stations (the radio stations 2 and 3) transfer the received divided data to the main radio station (the radio station 1). Upon receiving the divided data from the terminal and the sub-radio stations, first, the main radio station combines the received data portions for each of reception paths according to sequence numbers. Further, the main radio station divides and rearranges the combined data according to the numbers of bits of the divided portions included in the control signal shown in FIG. 12A to thereby combine the data received in association with one another. In this way, the concept can also be applied when the three or more radio stations dividedly receive data in association with one another.

In the above explanation, it is assumed that the data having the same number of bits is periodically transmitted from the terminal to the associating radio stations. However, the number of bits of data transmitted in a radio link can be different for each transmission. For example, when the terminal adaptively changes a modulation and encoding ratio according to a channel state between the terminal and the associating radio stations, the number of bits of data for each transmission sometimes changes according to a modulation system in use. The number of bits of data for each transmission temporally changes in some case and changes in each transmission at a different frequency in other cases. The number of bits sometimes changes in transmission to a different space region.

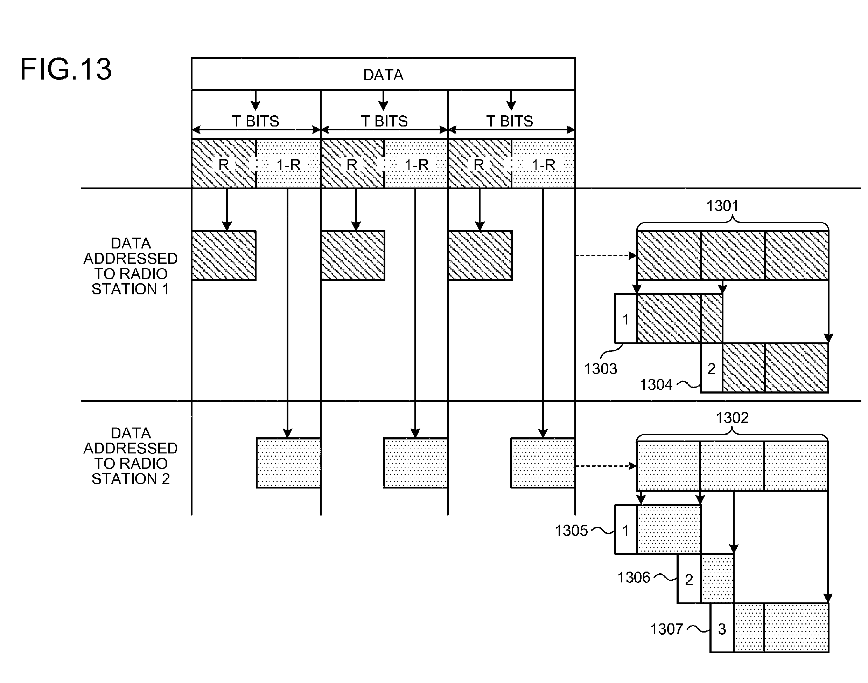

FIG. 13 is a diagram of an operation for dividing and transmitting data in the terminal when the number of bits of data is changed in every transmission. In an example shown in FIG. 13, the terminal divides data at a T bit period and divides T-bit data at a ratio of R:1-R. Thereafter, the terminal once combines data portions for each of the associating radio stations that receive the data (equivalent to data blocks 1301 and 1302 shown in the figure) and adaptively determines a modulation and encoding ratio according to a channel state and determines a bit size for each transmission. When the bit size for each transmission is determined, the terminal divides the once-combined blocks (the data blocks 1301 and 1302) by the determined bit size, adds headers 1303 to 1307 respectively to the blocks (divided data) after the division, writes sequence numbers in the headers, and transmits the data to the associating radio stations.

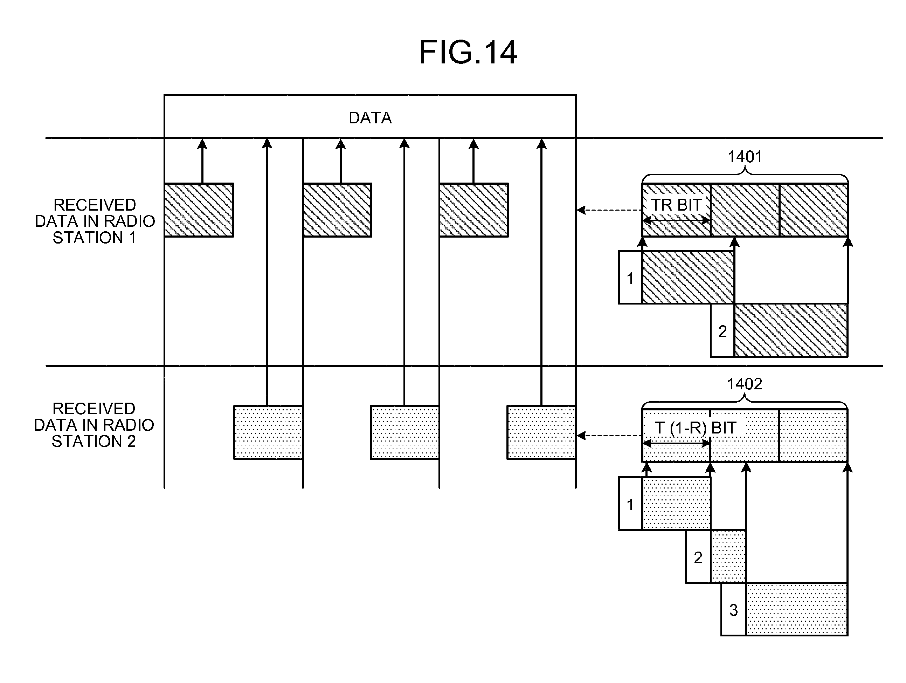

FIG. 14 is a diagram of an operation for integrating data on the associating radio station side (the main radio station) when the number of bits of data changed in each transmission. A procedure for combining the data divided according to the procedure shown in FIG. 13 and restoring the data to the original data is shown. As shown in the figure, the main radio station arranges the divided data directly received from the terminal in sequence number order of the divided data and combines the divided data to obtain a data block 1401. Further, the main radio station divides the data block 1401 for each TR bits. Similarly, the main radio station arranges the divided data received through the sub-radio station (the radio station 2) in sequence number order of the divided data and combines the divided data to obtain a data block 1402. Further, the main radio station divides the data block 1402 for each T(1-R) bit. Finally, the main radio station alternately arranges the data directly received from the terminal (TR-bit data blocks) and the data received through the sub-radio station (T(1-R)-bit data blocks) to thereby integrate the data.

In this way, in the associated transmission control in this embodiment, when the terminal dividedly transmits data, the terminal allocates sequence numbers in parallel to data portions transmitted to the associating radio stations and transmits divided data and an appropriate control signal to the associating radio stations. Consequently, the main radio station on the associating radio station side rearranges the received divided data according to sequence numbers added to the divided data and combines the divided data. Further, the main radio station can integrate the dividedly transmitted data and restore the data to the original transmission data by, after dividing the data into blocks for each predetermined bits according to the received control information, alternately rearranging the blocks.

### Third Embodiment

In a third embodiment, a retransmission control method applicable to the radio communication system explained with reference to the first and second embodiments is explained.

In the explanation in the first and second embodiment, a plurality of radio stations receive divided data in association with one another. However, the associating radio stations sometimes cannot correctly receive a part or all of data from a terminal. Therefore, in this embodiment, a retransmission control method in retransmitting data in such a situation is explained.

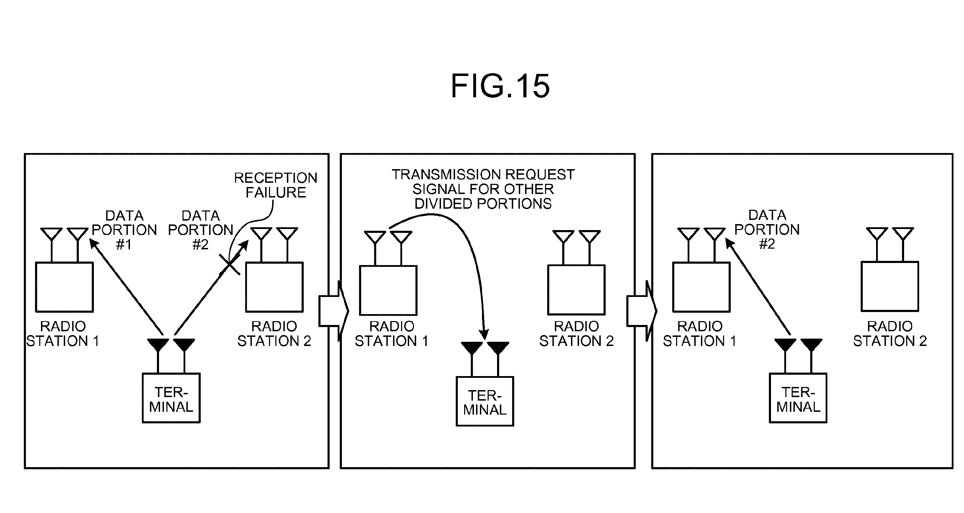

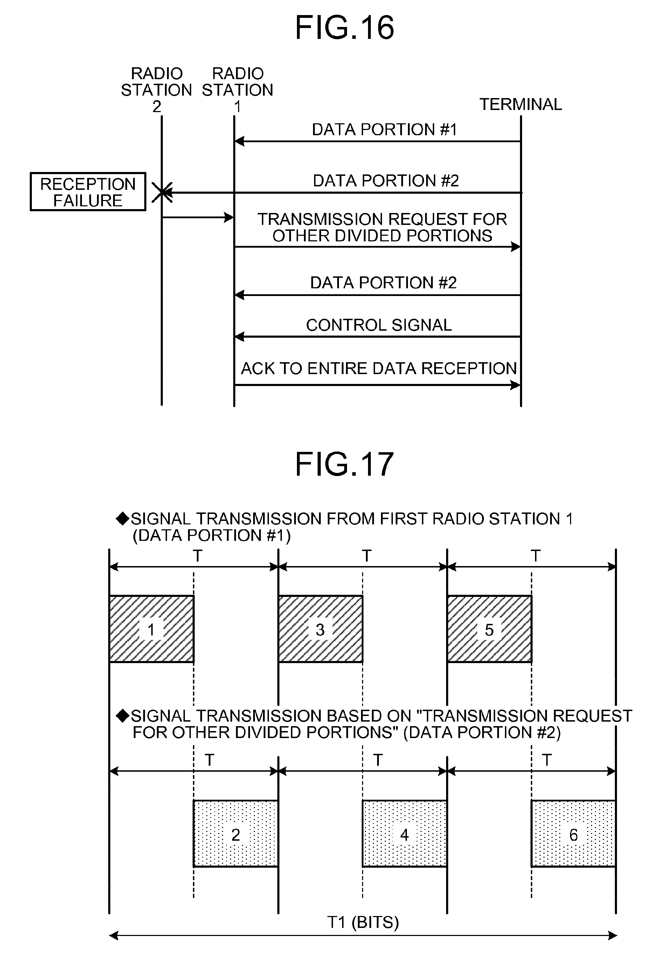

FIG. 15 is a diagram of an example of retransmission control in a radio communication system according to this embodiment. In FIG. 15, retransmission controlled performed when the terminal transmits a data portion #1 and a data portion #2 to the radio stations 1 and 2 in the divided data transmission mode (the transmission mode A) is shown. FIG. 16 is a sequence chart for explaining a retransmission control operation shown in FIG. 15.

The data portions #1 and #2 shown in FIGS. 15 and 16 are the same as the data portions explained in the first and second embodiments (the TR-bit data portion and the T(1-R)-bit data portion) and are a part of divided data. However, the associating radio stations sometimes cannot correctly receive the data portions #1 and #2. Therefore, for example, when the radio station 2 cannot correctly receive the data portion #2, in the radio communication system according to this embodiment, the radio station 2 informs the radio station 1 (the main radio station) to that effect. In this case, the radio station 1 requests the terminal to transmit the data portion #2. In this case, to request the terminal to transmit a portion different from a data portion already transmitted, the radio station 1 transmits a control signal for requesting transmission of another divided portion ("transmission request for other divided portion"). Upon receiving the "transmission request for another divided portion", the terminal transmits, to the radio station 1, a data portion (the data portion #2) other than the data portion already transmitted to the radio station 1. At this point, the terminal transmits, together with the data portion, a control signal indicating that the transmission is transmission of a data portion corresponding to the "transmission request for another divided portion". The radio station 1 that receives the control signal and the data recognizes, from the received control signal, the data portion #2 corresponding to the "request signal for another divided portion" transmitted before the control signal is transmitted from the terminal and integrates the data portion #2 with the already-received data portion #1 to thereby receive the entire data.

Further, as shown in FIG. 16, when the radio station 1 succeeds in the integration of the data portions #1 and #2, the radio station 1 transmits a signal indicating that the success in the reception of the entire data (ACK to entire data reception) to the terminal. The terminal that receives the ACK deletes a corresponding data portion (a data portion, normal reception of which is confirmed by the reception of the ACK) accumulated in the buffer (the data buffer 71, see FIG. 7). In this way, the "ACK to entire data reception" is notified to the terminal as the control signal. Therefore, it is possible to reduce an amount of data accumulated in the buffer in the terminal and reduce the buffer size in the terminal.

In FIG. 16, the "transmission request for other divided portion" and the "ACK indicating the success in the reception of the entire data" are simultaneously used. However, the "ACK indicating the success in the reception of the entire data" can be applied as well when the "transmission request for another divided portion" is not transmitted. For example, when data portions are correctly received respectively from the radio stations 1 and 2, the radio station 1 (the main radio station) notifies the terminal of the "ACK indicating the success in the reception of the entire data" as a control signal. As a result, the terminal can delete a corresponding data portion accumulated in the buffer. When the radio station 2, which is the sub-radio station, can correctly receive a data portion from the terminal, the radio station 2 can notify or does not have to notify the radio station 1 to that effect. In the radio communication system according to this embodiment, the sub-radio station transfers received data portions to the main radio station and the main radio station integrates the data portions. Therefore, the main radio station can determine whether the reception of the entire data is successful even if the sub-radio station does not notify to that effect.

The "ACK indicating the success in the reception of the entire data" is notified from the radio station that receives only a part of data portions to the terminal. Therefore, the "ACK indicating the success in the reception of the entire data" is different from ACK in radio transmission in the past. The ACK in the radio transmission in the past is transmitted from radio stations that receive data to a transmission source terminal of the data to notify the reception of the data. On the other hand, the "ACK indicating the success in the reception of the entire data" in this embodiment notifies the terminal that the entire data including portions not received by the radio stations that transmit this signal can be received.

Instead of notifying the "ACK indicating the success in the reception of the entire data" from the main radio station to the terminal as a control signal, it can be notified, as a control signal, to which extent the main radio station can receive the data. For example, the main radio station notifies the terminal of a final sequence number of data that can be integrated. The terminal deletes, from the buffer, data portions corresponding to sequence numbers smaller than the notified sequence number. In this way, the main radio station notifies the terminal of the final sequence number of the data that can be integrated. This is also included in this embodiment.

Instead of notifying the "ACK indicating the success in the reception of the entire data" from the main radio station to the terminal as the control signal, the terminal can time an elapsed time from a data transmission point using a timer and delete, from the buffer, accumulated data when a predetermined time elapses from a transmission point. In this way, the accumulated data including un-transmitted data portions (portions not transmitted by the terminal) is deleted based on the elapsed time. This is also included in this embodiment.

FIG. 17 is a diagram for explaining a retransmission operation by the radio station in this embodiment. A relation between a data portion transmitted to the radio station 1 by the terminal first (the data portion #1) and a data portion transmitted in response to the reception of the "transmission request for another divided portion" (the data portion #2) is shown. When the data portion #1 is a former half portion of T-bit data after division, the data portion #2 is data of the remaining latter half portion. To clearly define a range of the other data portions (the other divided portions), information concerning a range T1 (bits) of target data is shared between the associating radio stations and the terminal. It is possible to update this information by transmitting and receiving a control signal between the associating radio stations and the terminal. In a radio standard, the range T1 (bits) of the data can be determined as a fixed number of bits and shared. The range T1 (bits) of the data can be matched to a frame time. In this case, the "transmission request for another divided portion" indicates another data portion corresponding to a data portion transmitted in the frame.

When the terminal transmits a data portion corresponding to the "transmission request for another divided portion" (in an example shown in FIG. 17, the data portion #2), an amount of data (the number of bits) that the terminal can transmit to the radio station 1 in one transmission and an amount of data (the numbers of bits) that the terminal transmits to the radio station 2 in one transmission are sometimes different. In this case, the terminal can change a data form to match a transmission data amount in one transmission to the radio station 1 and transmit the data portion by re-dividing or combining the "other data portion" to be transmitted. When the data form is changed in this way, the terminal notifies, as control information, the radio station 1 of the data forma or a data format to be used. The radio station 1 receives a signal according to the received control information.

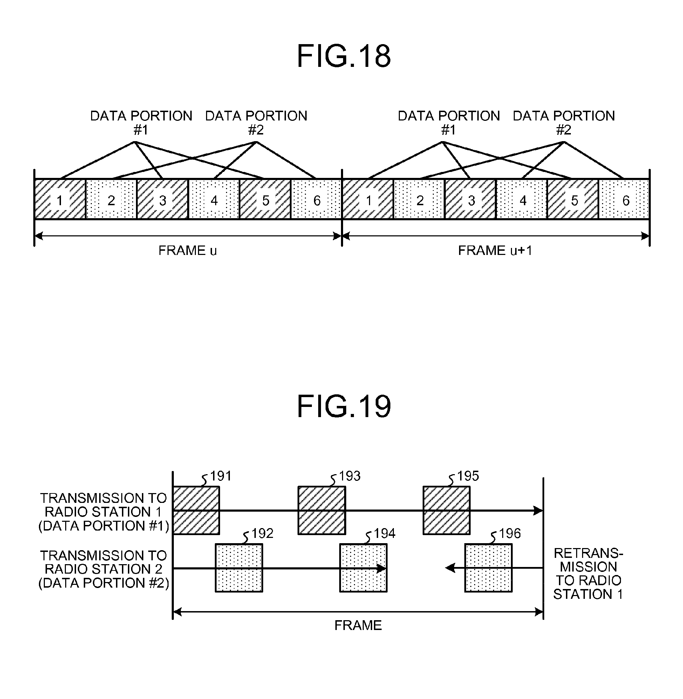

FIG. 18 is a diagram of an example of a method of defining data portions. In FIG. 18, an example in which the data portion #1 and the data portion #2 are defined in a frame unit is shown. In the radio communication system to which such a defining method is applied, after transmitting the data portion #1 of a frame u to the main radio station, when the terminal receives the "transmission request for another divided portion", the terminal transmits the data portion #2 of the frame u. On the other hand, after transmitting the data portion #1 of the frame u to the main radio station, when the terminal receives ACK indicating success of reception of the entire data from the main radio station, the terminal starts transmission of a frame u+1. In this way, when the terminal receives the "transmission request for another divided portion" before the terminal receives, from the main radio station, the ACK indicating that the entire data in a frame is received, the terminal transmits the remaining data portions of the frame. In this way, it is possible to perform simple control by treating the "request for another divided portion" in the frame unit. It is also a characteristic of this embodiment to transmit ACK indicating that the main radio station succeeds in reception of entire data. With this configuration, the terminal can check the reception of the entire data and simultaneously shift to control of the next frame.

The series of retransmission control explained above can be realized by the radio station having the configuration shown in FIG. 6 and the terminal having the configuration shown in FIG. 7. The radio station (the main radio station) determines whether the signal receiving unit 61 succeeds or fails in reception. In the case of the reception failure, the control-information transmitting unit 64 transmits the "transmission request for another data portion". When the terminal receives the request signal in the control-information receiving unit 78, the terminal recognizes, in the control-method determining unit 77, that the request signal is the "transmission request for another data portion" and extracts, in the data dividing unit 72, necessary data out of the data stored in the data buffer 71. The terminal generates, in the control-method determining unit 77, a control signal indicating transmission of a data portion corresponding to the "transmission request for another data portion". The terminal transmits the generated data and the generated control signal to the main radio station via the known-signal and control-information transmitting unit 79.

According to the retransmission control explained in this embodiment, the terminal can transmit the entire data to the radio station 1 even if a connection state to the radio station 2 is poor. When the retransmission control in this embodiment is not applied, if a state of any radio link between the associating radio stations and the terminal is deteriorated, the terminal cannot transmit the entire data and communication quality is substantially deteriorated. It is extremely important in operation to always guarantee communication quality. A service that cannot guarantee communication quality causes serious troubles in practice. On the other hand, when this control is used, even if a channel state suddenly changes and connection to the radio station 2 is deteriorated, the radio station 1 can support signal transmission from the terminal by receiving data that should originally be received by the radio station 2. In this way, when the retransmission control in this embodiment is used, it is possible to solve the problem of the deterioration in communication quality in multi-link signal transmission.

The retransmission control explained in this embodiment and the system in the past (the system in which the sub-radio station that fails in reception requests the terminal to perform retransmission) can be used together. In this case, the sub-radio station that fails in reception requests the terminal to perform retransmission and transmits the "transmission request for another divided portion" to the main radio station as well. The terminal transmits a data portion corresponding to request content (in the example shown in FIG. 15, the data portion #2) to the radio stations 1 and 2. Consequently, the terminal can more surely transmit a data portion requested to be retransmitted.

In the explanation in this embodiment, the main radio station transmits a transmission request to the terminal. However, another associating radio station can transmit the same transmission request. As a more desirable form, it is desirable that the main radio station and the sub-radio station(s) are determined among the associating radio stations and the main radio station is responsible for communication quality of data transmission in the terminal. With such a configuration, the main radio station preferentially transmits the "transmission request for another data portion" to the terminal.

As explained above, in the radio communication system according to this embodiment, when the associating radio station cannot receive data dividedly transmitted from the terminal, to transmit the data that cannot be received, the associating radio station different from the associating radio station that cannot receive the data requests the terminal to transmit the data that cannot be received. Consequently, it is possible to solve the problem of the deterioration in communication quality in associated transmission. In the radio communication system according to this embodiment, the terminal transmits the control signal for notifying that a data portion different from initial transmission is transmitted (a data portion corresponding to the request from the associating radio station is transmitted). Therefore, the associating radio station that requests the retransmission can grasp transmission content from the terminal.

### Fourth Embodiment

In a fourth embodiment, a more desirable form is disclosed in which the terminal transmits a retransmission request to the associating radio station in the retransmission control explained in the third embodiment.

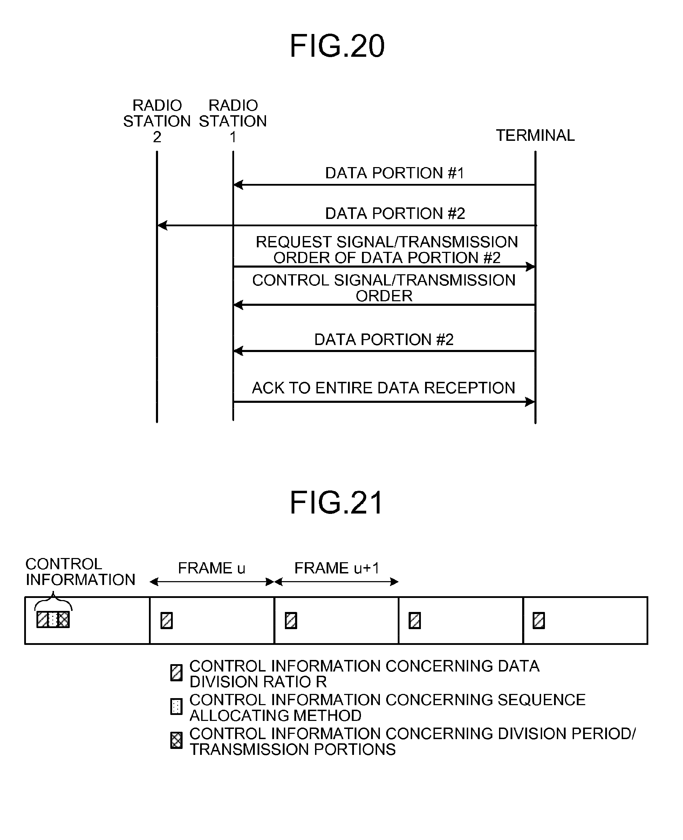

In the explanation in the third embodiment, the terminal transmits another data portion in response to the "transmission request for another divided portion" received from the associating radio station. However, there are various methods for the transmission of another data portion. The methods are explained with reference to FIGS. 19 and 20.

FIG. 19 is a diagram of an example of a transmission control operation in a radio communication system according to this embodiment. In the example, in an operation in which the radio stations 1 and 2 receive uplink data from the terminal in association with each other, the terminal transmits the data portions #1 and #2 in one frame to the radio stations 1 and 2, respectively and then retransmits the data portion #2 in response to a request from the radio station 1. In FIG. 19, 191 to 196 are sequence numbers granted to respective data portions transmitted by the terminal.

In the operation shown in FIG. 19, first, the terminal transmits the data portion #1 (divided data 191, 193, and 195) to the radio station 1 and transmits the data portion #2 (divided data 192, 194, and 196) to the radio station 2. In the first transmission, the terminal transmits the divided data to the radio stations in order from one having the smallest sequence number. For example, the terminal transmits the divided data 191, the divided data 193, and the divided data 195 to the radio station in this order. Thereafter, the terminal is requested by the radio station 1 to transmit the data portion #2. At this point, the terminal can transmit the requested data portion #2 in order same as the order of the prior transmission from the radio station 2 (in the order from the divided data having the smallest sequence number). Alternatively, the terminal can transmit the data portion #2 in the opposite order (in the order of the divided data 196, the divided data 194, and the divided data 192).

Originally, the terminal should transmit the data portion #2 to the radio station 2. However, when transmission speed between the radio station 2 and the terminal is lower than an assumption, a required time until the entire data portion #2 reaches the radio station 2 increases. In such a case, it is likely that the radio station 2 can receive the divided data 192 and the divided data 194 but cannot receive the divided data 196, i.e., the radio station 1 (the associating radio station that integrates received divided data) cannot receive the divided data 196 from the radio station 2. Therefore, if the terminal transmits the data portion #2 in the order of the divided data 196, the divided data 194, and the divided data 192, the radio station 1 receives all the divided data of the data portion #2 at a point when the radio station 1 receives the divided data 196. As a result, ACK (ACK indicating that the radio station 1 succeeds in reception of the entire data) is transmitted from the radio station 1 before the terminal transmits the entire data portion #2. The terminal can stop the transmission of the data portion #2 halfway. Incidentally, the entire data indicates entire data in one frame. When such a retransmission control operation is applied, even if the terminal does not transmit all the divided data of the data portion #2, the radio station 1 receives all the divided data. Therefore, it is possible to prevent received divided data (divided data that does not need to be transmitted) from being retransmitted to the radio station 1 and reduce time until the start of transmission of the next frame and improve radio transmission efficiency.

FIG. 20 is a diagram of a control sequence corresponding to the operation explained with reference to FIG. 19. In a transmission procedure shown in FIG. 20, first, the terminal transmits the data portions #1 and #2 to the radio stations 1 and 2 according to the divided data transmission mode. For example, when the radio station 2, which is the sub-radio station, cannot receive a part of the data portion #2, the radio station 2 notifies the first radio station 1 to that effect. The radio station 1 requests the terminal to transmit the data portion #2. When the radio station 1 requests the transmission of the data portion #2, concerning transmission order of the divided data in the data portion #2, the radio station 1 requests the transmission according to a format defined in advance. The terminal transmits, according to the request from the radio station 1, the divided data in the data portion #n in an appropriate format among several formats defined in advance concerning the transmission order of the divided data. The terminal notifies, using a control signal, the radio station 1 of the transmission order of the divided data or a format number defining the order. The radio station 1 analyzes the control signal transmitted together with the data portion #2, transmission of which is requested, to thereby grasp the transmission order of the divided data of the data portion #2 and receives data. Upon receiving all the divided data, the radio station 1 transmits an ACK signal indicating that the entire data is received to the terminal. The transmission of the ACK signal can be performed before the terminal finishes transmitting the entire data portion #2. When the terminal receives the ACK signal from the terminal before completing the transmission of the data portion #2, the terminal stops the transmission of the data portion #2 halfway. Because the data transmission is stopped halfway, it is possible to reduce unnecessary data transmission and improve radio transmission efficiency. Further, it is possible to reduce interference with the environment.

In this embodiment, the data is retransmitted in a unit of the divided data from the divided data having the largest sequence number to the divided data having the smallest sequence number (the retransmission is performed in the order opposite to the order of the first transmission). However, a method of transmitting bits from a last bit (or symbol) to a first bit of a frame in order in an information symbol unit or an information bit unit is also possible. In this case, even while the terminal is performing the retransmission, the associating radio station on the reception side transmits ACK at a stage when the reception of the entire data is completed. Therefore, the terminal can stop the transmission of the data. Consequently, it is possible to reduce unnecessary data transmission and improve radio transmission efficiency. Further, it is possible to reduce interference with the environment.

As explained above, in the radio communication system according to this embodiment, the terminal that retransmits data in response to a request from the associate radio station transmits the retransmission data in order opposite to the order of the prior transmission of the data. Consequently, it is possible to prevent an amount of data to be retransmitted from becoming equal to or larger than necessary, improve radio transmission efficiency, and reduce interference with the environment. Further, it is possible to reduce time until transmission of the following data is started.

### Fifth Embodiment

In a fifth embodiment, a method of controlling data divided portions transmitted from the terminal to the radio stations in a frame unit in the radio communication system explained in the first to fourth embodiments is explained. In this embodiment, it is assumed that the radio stations 1 and 2 of the radio communication system receive uplink data from the terminal in association with each other as shown in FIG. 1.

In a state in which the radio stations 1 and 2 of the radio communication system explained in the first to fourth embodiments are receiving uplink data from the terminal in association with each other in the transmission mode A (the divided data transmission mode), when the terminal completes data transmission to the radio station 1 in a certain frame (the frame u) earlier than data transmission to the radio station 2, the terminal can start data transmission to the radio station 1 in the next frame u+1 earlier than data transmission to the radio station 2.

A division ratio of data transmitted from the terminal to the associating radio stations can be changed for each of the frames. For example, when data transmission to the radio station 1 in the frame u is completed earlier than data transmission to the radio station 2, in the next frame u+1, it is considered that data can be transmitted to the radio station 1 at a ratio higher than the present (frame u). Therefore, to match arrival times of data portions in the radio stations 1 and 2, it is more suitable to transmit the data to the radio station 1 at a higher division ratio R in the next frame u+1.

Changing the data division ratio in a frame unit in this way can be realized by notifying, in a frame unit, control information concerning "data division ratio" (equivalent to the division ratio R shown in FIG. 8) in the control signal shown in FIG. 8.

FIG. 21 is a diagram of an example of an operation for notifying, for each of the frames, control information concerning a data division ratio. When the data division ratio is changed for each of the frames, the main radio station notifies the sub-radio station and the terminal of the division ratio R (control information concerning the data division ratio) for each of the frames as shown in FIG. 21. It is unnecessary to change the other control information (control information concerning the sequence number allocating method, and control information concerning a division period and transmitted portions) for each of the frames. Therefore, the main radio station notifies the other control information at a period longer than the frame. In this way, in the control operation for changing the data division ratio for each of the frame, the division ratio R or the information equivalent to the division ratio R is notified in a frame unit and the other control information related to data division is notified at a longer period. This is also one of characteristics of the radio communication system according to this embodiment. Consequently, it is possible to prevent the control information transmitted from the associating radio station to the terminal from increasing more than necessary. The control information concerning the data division ratio can be transmitted for each several frames rather than being transmitted for each of the frame. In this case, as in the case explained above, the other control information is transmitted at a further long period. Further, the control information concerning the data division ratio can be transmitted when it is determined that the data division ratio needs to be changed.

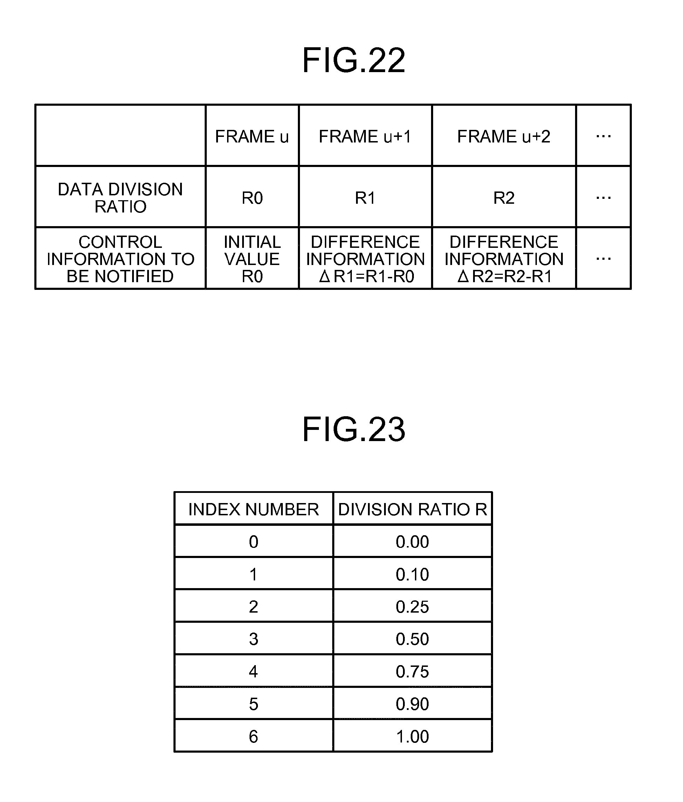

The radio communication system can be configured to, rather than always notifying the division ratio R as the control information concerning the "data division ratio", as shown in FIG. 22, notify an initial value (R0) of the division ratio R in a leading frame and notify only difference values (ΔR1, ΔR2, etc.) of ratios from the preceding frame as control signals in the following frames. If this configuration is used, it is possible to reduce an amount of data to be notified compared with the notification of a value of the division ratio for each of the frames.

It is also possible to standardize correspondence between representative values concerning the data division radio R and index numbers and notifies a corresponding index number to reduce a control information amount. In this case, the associating radio stations and the terminal retain table information shown in FIG. 23 in advance. FIG. 23 is a diagram of an example of a correspondence table of the division ratio R and the index number. In this way, the index number is notified as the control information concerning the division ratio R. Consequently, it is possible to reduce an amount of control information. In continuous frames, only a change in the index number corresponding to the preceding frame can be notified. For example, only changes of the index number +1, 0, and -1 are performed with respect to the preceding frame. This makes use of a characteristic that division ratios tend to be similar values in the continuous frames. In this case, it is possible to further reduce an amount of control information.

It is more desirable to change control information related to data division in a terminal unit. This is because an appropriate data division ratio changes according to a presence position of the terminal. Therefore, it is more desirable that the main associating radio station determines an appropriate data division ratio in a terminal unit according to channel state notification from the terminal.

As explained above, in the radio communication system according to this embodiment, a division ratio of uplink data transmitted from the terminal to the associating radio stations (a ratio of amounts of data transmitted to the associating radio stations) is changed in a frame unit. Therefore, it is possible to realize efficient radio transmission.

### Sixth Embodiment

In a sixth embodiment, a radio communication system that carries out associated transmission control different from the associated transmission controls in the first to fifth embodiments is explained.

In the first to fifth embodiments, the radio communication system is explained in which the main radio station among the associating radio stations determines an associated transmission method (a transmission mode and a data dividing method) based on, for example, channel states of radio links between the associating radio stations and the terminal. On the other hand, in this embodiment, a radio communication system is explained in which the terminal determines an associated transmission method such as a transmission mode and a data dividing method and notifies the associating radio stations of the associated transmission method as a control signal.

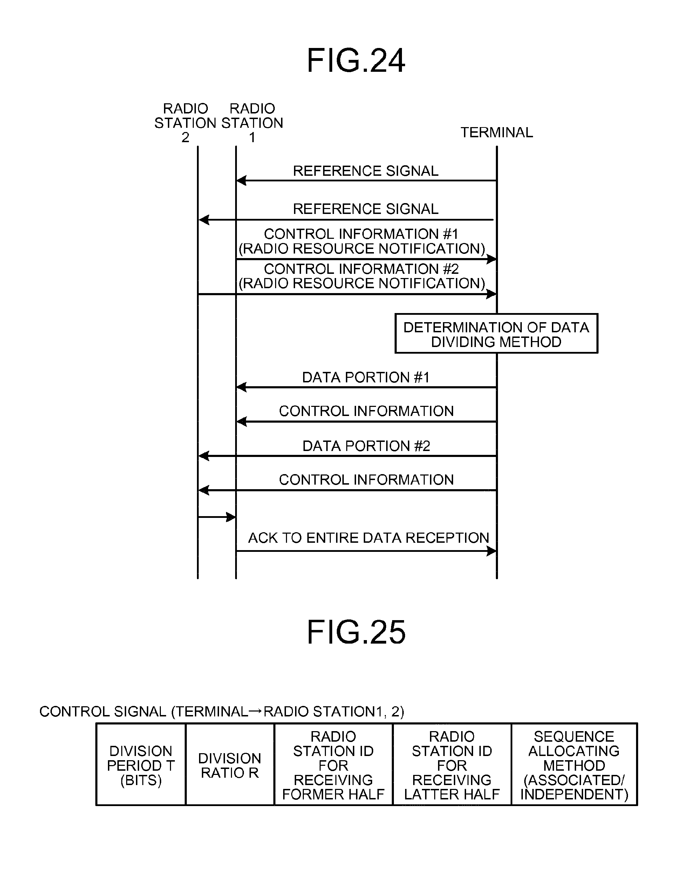

FIG. 24 is a sequence chart for explaining a control procedure in which the associating radio stations receive data in association with each other in the radio communication system according to this embodiment. An example in which the radio stations 1 and 2 receive uplink data from the terminal in association with each other is shown. In this example, the radio station 1 is set as the main radio station and the transmission mode A (the divided data transmission mode) is used. As shown in the figure, in the radio communication system according to this embodiment, when the radio stations 1 and 2 receive uplink data from the terminal in association with each other, the terminal transmits a reference signal for channel quality measurement (or a known signal or a sounding signal) to the radio stations 1 and 2 (the associating radio stations) set as transmission destinations of divided data. The terminals 1 and 2 measure channel quality and then notify the terminal of, as control information #1 and #2, radio resources that the terminal can use for transmission. The terminal determines an appropriate transmission mode based on the control information #1 and #2 (the radio resources that the terminal can use for transmission) received from the radio stations 1 and 2.

As a more desirable form of transmission mode selection, a form is particularly effective in which the terminal selects a transmission mode from two transmission modes explained below as in the first to fifth embodiments in which a transmission mode is determined on the associating radio station side.

Transmission mode A: divided data transmission mode
The terminal divides data and transmits different data portions to the associating radio stations.
Transmission mode B: same data transmission mode
The terminal transmits same data to the associating radio stations.

When the terminal selects the transmission mode A, the terminal further determines a data dividing method. For example, when the radio resources granted from the radio station 1 (radio resources usable in transmission to the radio station 1) is larger than the radio resources granted from the radio station 2, the terminal determines a division ratio such that an amount of data to be transmitted to the radio station 1 is larger. After determining the data dividing method, the terminal performs division of uplink data and transmission to the radio stations 1 and 2 according to a determination result. In transmitting divided data, the terminal transmits control information concerning the transmission mode and the data dividing method to the radio stations 1 and 2 as well. On the associating radio station side, the radio station 2, which is the sub-radio station, transfers the data portion #2 and the control information received from the terminal to the radio station 1, which is the main radio station. The radio station 1 integrates the data portion #1 received from the terminal and the data portion #2 received from the radio station 2 according to the control information received from the terminal (including the control information received from the terminal through the sub-radio station). When the radio station 1 normally receives the data portions #1 and #2 (when processing up to integration processing ends), the radio station 1 transmits ACK indicating to that effect (ACK to entire data reception) to the terminal. Processing after the associating radio stations receive the divided data from the terminal (processing for receiving the divided data, integrating the divided data, and transmitting ACK) is the same as the processing after the associating radio stations receive the divided data from the terminal explained in the first to fifth embodiments.

When the associating radio stations are two stations as shown in FIG. 24, the radio station 1, which is the main radio station, can recognize the transmission mode and the data dividing method by analyzing the control information directly received from the terminal. Therefore, the radio station 2, which is the sub-radio station, does not have to transfer the control information to the radio station 1. Therefore, the terminal does not have to transmit the control information to the radio station 2. Even if the associating radio stations are three or more stations, the main radio station performs integration of data portions dividedly transmitted to the associating radio stations. Therefore, the terminal can transmit the control information concerning the transmission mode and the data dividing method to only the main radio station.

FIG. 25 is a diagram of an example of a control signal transmitted to the associating radio stations (the radio stations 1 and 2) by the terminal when the associating radio stations are two stations. The control signal shown in FIG. 25 includes the division period T (bits), the division ratio R, a radio station ID for receiving the former half, a radio station ID for receiving the latter half, and a sequence allocating method indicating a method of allocating sequence numbers (associated or independent). The associating radio stations that receive the control signal from the terminal can recognize data portions (divided data) received by the associating radio stations by decoding the radio station ID for receiving the former half and the radio station ID for receiving the latter half. The associating radio stations grasp a data dividing method by decoding the division period T and the division ratio R. Further, the associating radio stations can recognize a method of allocating sequence numbers to divided data (associated sequence number allocation or independent sequence number allocation) by decoding the sequence allocating method.

The control signal transmitted from the terminal to the associating radio stations can be transmitted for each of frames. When the control signal is transmitted for each of frames, the terminal can change, for each of frames, a division ratio of data between the associating radio stations (a ratio of an amount of data transmitted to the associating radio stations). It is also possible to adopt a configuration in which the terminal notifies, in a frame unit, only information concerning the data division ratio and notifies other control information (the sequence number allocating method and information concerning a division period and transmitted portions) at a period longer than the frame. The "information concerning the data division ratio" is the division ratio R or information equivalent to the division ratio R in the case of the control signal shown in FIG. 25. With such a configuration, it is possible to efficiently notify the associating radio stations of only the division ratio R that is required to be changed at a short period. When this configuration is applied, associated reception of data can be performed between the associating radio stations even if associated control concerning the data dividing method is not performed. The information concerning the data division ratio can be transmitted for each several frames rather than for each one frame. The information can be transmitted when it is determined that the data division ratio needs to be changed.

It is also possible to adaptively select the associated control explained in this embodiment and the associated control explained in the first to fifth embodiments. For example, when the radio stations 1 and 2 are adjacent base stations belonging to the same cellular network, it is possible to use the first to fifth embodiments in which the associated control is performed via the wire network between the radio stations 1 and 2. On the other hand, when the radio station 1 is a base station of a cellular network and the radio station 2 is an access point of a wireless LAN, it is desirable that the terminal determines the transmission mode and the data dividing method as in this embodiment. Therefore, it is selected according to a form of the associating radio stations whether associated transmission led by the associating radio stations is performed in the associated control between the associating radio stations or associated transmission led by the terminal is performed according to an instruction from the terminal.

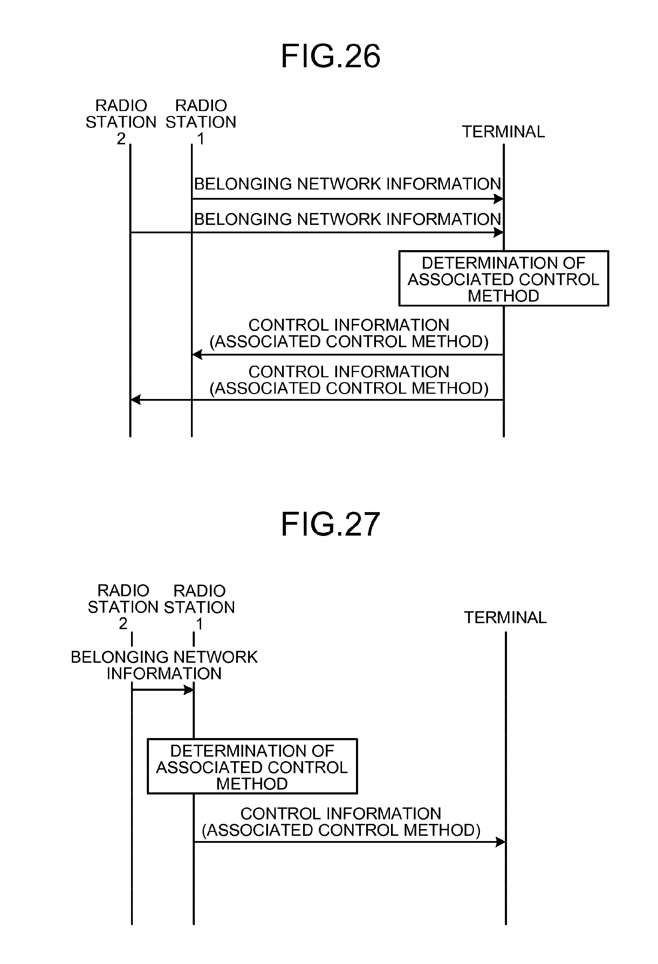

FIG. 26 is a diagram of an example of control for selecting which of associated control led by the associating radio stations and associated control led by the terminal is carried out. In a control procedure shown in FIG. 26, first, the radio stations 1 and 2 notify the terminal of belonging network information (information concerning a network to which a transmission source radio station of this information belongs). Subsequently, the terminal determines an associated control method (led by the terminal or led by the base stations) based on the belonging network information notified from the radio stations and transmits control information indicating a determination result (the associated control method) to the radio stations 1 and 2. Thereafter, the radio stations 1 and 2 carry out the associated control according to the associated control method indicated by the received control information. FIG. 27 is a diagram of a different example of the control for selecting which of the associated control led by the associating radio stations and the associated control led by the terminal is carried out. In a control procedure shown in FIG. 27, first, the radio station 2, which is the sub-radio station, notifies the radio station 1, which is the main radio station, of belonging network information. Subsequently, the radio station 1 determines an associated control method based on the notified information (the network belonging information of the radio station 2) and transmits control information indicating a determination result to the terminal. The terminal that receives the control information carries out the control explained in this embodiment or the first to fifth embodiments according to the associated control method indicated by the control information. In this way, it is possible to adaptively select according to a network environment whether the associated control between the associating radio stations is performed while being led by the associating radio stations or led by the terminal.

### Seventh Embodiment

In a seventh embodiment, a data dividing method in the associated transmission controls explained in the first to sixth embodiments is explained.

In the embodiments explained above, an example of a control signal format transmitted and received between the associating radio stations or between the radio station and the terminal is disclosed in FIG. 8. The control signal format includes control information such as radio station IDs as information for specifying the radio stations that receive portions of divided data. On the other hand, in this embodiment, a radio communication system is explained in which it is unnecessary to notify information for specifying the radio stations that receive portions of divided data while including the information in a control signal. Specifically, a radio communication system is explained in which the radio stations that receive portions are determined according to rules determined in advance to make it unnecessary to notify information for specifying the radio stations that receive portions of divided data.

For example, the radio station having a small radio station ID among the associating radio stations is determined in advance to receive the former half of data. In this case, it is unnecessary to notify a relation between radio stations ID and data portions received according to the radio station IDs in the control signal. The associating radio stations only have to grasp the radio station IDS thereof one another in advance. In this case, the radio stations can recognize divided data, which the radio stations should receive, according to notification of only the data dividing method. As a result, it is possible to improve transmission efficiency.

When the associating radio stations are two stations, it is determined in advance that the main radio station receives a first data portion and the sub-radio station associating with the main radio station receives a second data portion. Consequently, it is unnecessary to notify, using the control signal, a relation between radio station IDs and data portions received according to the radio station IDs. In this case, as in the case explained above, if only the data dividing method (a division start position, a division period, and a division ratio) is notified by the control single, the radio stations can recognize the data portions that the radio stations receive.

It is also possible to use a method of allocating, among the associating radio stations, simple radio station IDs obtained by reducing the original radio station IDs. For example, when the original radio station IDs are IP addresses, a large number of bits are necessary. However, when the associating radio stations are three stations, the control signal is transmitted with simple radio station IDs of two bits (00, 01, 10, and 11) granted to the three associating radio stations. With such a configuration, it is possible to a control signal amount necessary for the notification of the radio station IDs and improve transmission efficiency.

### Eighth Embodiment

In an eighth embodiment, associated reception by a plurality of radio stations having a form different from the form in the first to seventh embodiment is explained.

When a plurality of radio stations perform associated reception, in maintaining transmission quality, it is important to measure a relative delay of signals received by the radio stations. The relative delay is a difference between time until data addressed to the main radio station transmitted from the terminal reaches the main radio station and time until data addressed to the sub-radio station transmitted from the terminal reaches the main radio station through the sub-radio station. The relative delay includes all influences such as a processing delay and a propagation delay in a radio link.

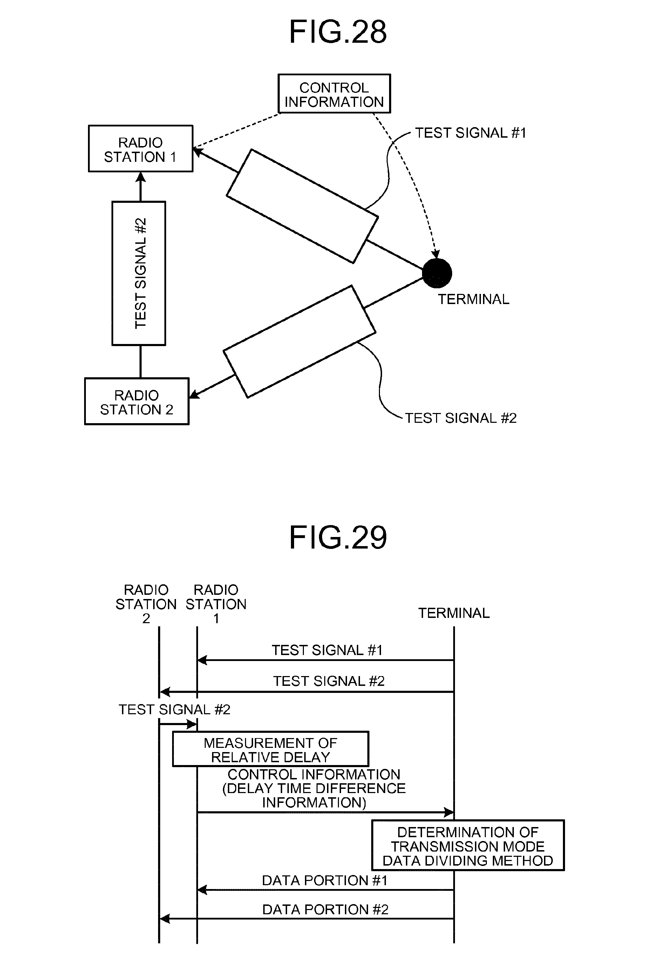

To measure the relative delay, in a radio communication system according to this embodiment, as shown in FIGS. 28 and 29, the terminal transmits a test signal #1 to the radio station 1. When the radio station 1, which is the main radio station, receives the test signal #1, the radio station 1 checks arrival time of the test signal #1. The terminal transmits a test signal #2 to the radio station 2. When the radio station 2, which is the sub-radio station, receives the test signal #2, the radio station 2 transfers the test signal #2 to the radio station 1 by using a transmission line same as a transmission line, through which divided data is transferred to the main radio station when the divided data is received. When the radio station 1 receives the test signal #2 through the radio station 2, the radio station 1 checks arrival time of the test signal #2. The radio station 1 transmits a control signal including information of relative delay information, which is a difference between arrival time of the test signal #1 and arrival time of the test signal #2, to the terminal. The terminal that receives the relative delay information from the radio station 1 determines a transmission mode and a data dividing method taking into account the notified relative delay, executes processing corresponding to a determination result, and transmits data to the radio stations 1 and 2. For convenience of explanation, in FIG. 29, timings when the terminal transmits the test signals #1 and #2 are shifted from each other. However, the terminal desirably transmits the test signals #1 and #2 simultaneously. If the terminal writes information concerning transmission time in the test signals #1 and #2 and transmits the test signals #1 and #2, it is not always necessary to transmit the test signals #1 and #2 simultaneously. However, when the terminal transmits the test signals #1 and #2 simultaneously, transmission time information is unnecessary. Therefore, it is possible to suppress a transmission data amount.

An example of associated transmission control is explained. For example, in associated transmission in the transmission mode B for transmitting the same data from the terminal to the radio stations 1 and 2, there is a form in which the terminal delays transmission start timing of divided data to the radio station 1 by the relative delay. The terminal delays the data transmission start timing to the radio station 1, whereby the radio station 1 can substantially simultaneously receive data (first data) directly transmitted from the terminal and data (second data) transmitted through the radio station 2. As a result, the terminal can easily combine the first data and the second data. When reception timing of the first data and reception timing of the second data are substantially different, the radio station 1 has to store the data arrived earlier in memories for a predetermine time. A large number of memories are necessary. On the other hand, if the method in this embodiment is used, it is possible to reduce a memory amount required when the radio stations operate as the main radio station.

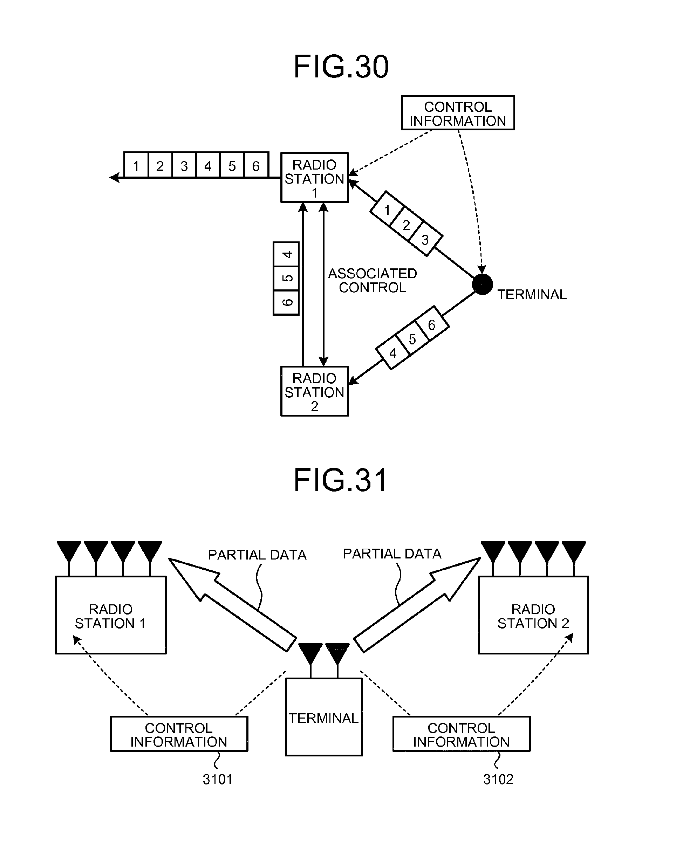

An example of different associated transmission control is explained. When associated transmission in the transmission mode A for transmitting different portions of uplink data divided as shown in FIG. 30 from the terminal to the associating radio stations (the radio stations 1 and 2) is executed, the terminal transmits the former half portion of the divided data in a radio link to the main radio station (the radio station 1) of short delay time and transmits the latter half portion of the divided data in a radio link to the sub-radio station (the radio station 2) of long delay time. The main radio station that integrates the divided data needs the data of the former half portion earlier. Therefore, the terminal transmits a signal of the former half portion (data 1, 2, and 3 in FIG. 30), which is requested to be transmitted with small delay, to the radio station 1. On the other hand, the terminal transmits a single of the latter half portion (data 4, 5, and 6 in FIG. 30), which is allowed to be delayed, to the radio station 2.

An example of different associated transmission control is explained. For example, when two kinds of communication with different allowable delay amounts such as sound and mail are provided to the terminal, the terminal transmits communication data of a short allowable delay (sound, etc.) to the radio station 1 and transmits communication data of a long allowable delay (mail, etc.) to the radio station 2. In this way, the radio station to which data is transmitted is determined for each of the kinds of communication based on a measured relative delay. Therefore, it is possible to maintain communication quality.

This embodiment can be used in combination with all of the first to seventh embodiments. In particular, in a combination with the sixth embodiment in which the terminal determines and notifies a data dividing method, the terminal determines a data dividing method based on a relative delay and notifies the associating radio stations of the data dividing method. Therefore, it is possible to improve transmission efficiency.

As explained above, in this embodiment, among the radio stations that receive data in association with the other radio station(s), the radio station (the main radio station) that integrates received data in a divided state measures a relative delay of a signal transmitted from the terminal and notifies the terminal of relative delay information. Consequently, the terminal can determine, based on the notified relative delay information, data to be transmitted to the associating radio stations. Therefore, it is possible to maintain high signal quality taking into account a delay.

### Ninth Embodiment

In a ninth embodiment, a form of associated transmission by a plurality of radio stations different from the form in the first to eighth embodiments is disclosed.

In radio communication in recent years, to cope with high-speed radio communication, configurations in which transmission and reception stations use a plurality of antennas are widely used. A system in which transmission and reception stations include a plurality of antennas is called MIMO (Multi-Input Multi-Output) system. It is widely known that there is an advantage that a plurality of signals can be spatially multiplexed in the MIMO system.

In general, a transmission station including M antennas can transmit maximum M spatially-multiplexed signals. However, it is difficult to simultaneously transmit M+1 or more signals to different space regions. This is because multiplexed signals cannot be successfully separated on a reception side. Therefore, when a terminal having M antennas transmits different data to a plurality of radio stations, a configuration for simultaneously transmitting M or fewer signals at the same time frequency is desirable.

To realize such a state, in this embodiment, as shown in FIG. 31, the terminal transmits control information 3101 and 3102 to the radio stations 1 and 2, respectively. These kinds of control information are information indicating a maximum number of spatially-multiplexed signals usable when the terminal transmits signals to the radio stations 1 and 2. The radio stations 1 and 2 set the numbers of spatially-multiplexed signals in ranges of the numbers of spatially-multiplexed signals respectively indicated by the control information 3101 and 3102 and instruct the terminal to transmit signals.

For example, when the number of antennas of the terminal is 2,
when the maximum number of spatially-multiplexed signals indicated by the control information 3101 is N1 and the maximum number of spatially-multiplexed signals indicated by the control information 3102 is N2,
for example, (N1, N2)=(1, 1), (2, 0), (0, 2), (1, 0), (0, 1), and the like are used as the "information concerning the maximum number of usable spatially-multiplexed signals".

When the terminal transmits signals to the associating radio stations in the range of the numbers of spatially-multiplexed signals (N1, N2), the number of signals simultaneously transmitted from the terminal is equal to or smaller than M. In this way, the terminal notifies the radio stations of the information concerning the maximum number of usable spatially-multiplexed signals. Consequently, it is possible to control the number of spatially-multiplexed signals to an appropriate value when the terminal transmits data to the associating radio stations.

The terminal can also periodically update the information concerning the maximum number of usable spatially-multiplexed signals by periodically notifying the control information 3101 and 3102. With such control, it is possible to flexibly set the number of spatially-multiplexed signals according to an environment.

The "maximum number of usable spatially-multiplexed signals" can be the number of spatially-multiplexed signals. In this case, the number of signals simultaneously transmitted from the terminal is equal to or smaller than M. The number of spatially-multiplexed signals can be referred to as the number of layers.

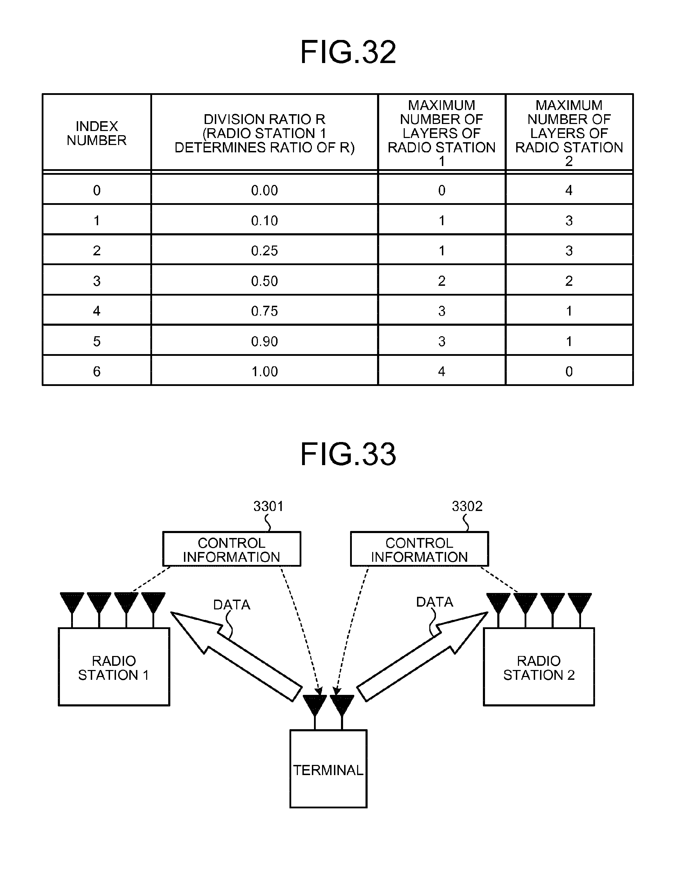

The control information 3101 and 3102 can also be defined in a table format together with the division ratio R as shown in FIG. 32. In FIG. 32, a terminal including four antennas (M=4) is assumed. The terminal can simultaneously transmit maximum four layers to the associating radio stations. In FIG. 32, the table is created taking into account the fact that the radio station that receives a larger number of data portions needs a larger number of layers. The table in which a received data amount and a necessary number of layers are combined making use of a correlation between the received data amount and the necessary number of layers is created in this way. Therefore, it is possible to reduce an amount of control information transmitted from the terminal to the associating radio stations. The table is created by combining an amount of data received by the associating radio stations and the number of layers. This is also a characteristic of the radio communication system according to this embodiment.

Unlike the configuration shown in FIG. 31, the radio stations 1 and 2 can also grasp the number of antennas of the terminal beforehand and determine the number of layers used by the radio stations 1 and 2 according to the associated control between the radio stations 1 and 2. In this case, as shown in FIG. 33, the radio stations 1 and 2 notify the terminal of the numbers of layers in use using control information 3301 and 3302, respectively. At this point, the radio stations 1 and 2 can also notify the terminal of information concerning the number of layers and data portions received by the radio stations using the table shown in FIG. 32. In this way, the table in which only necessary combinations concerning the information concerning the number of layers and the data portion received by the radio stations are combined is retained. Consequently, it is possible to efficiently notify the terminal of the control information.

The table shown in FIG. 32 indicates a correspondence relation between the data amount and the number of layers. However, the table does not have to be created as long as a control method has a relation to the data amount and the number of layers. For example, a configuration is also possible in which, when a data amount or a data ratio is determined, candidates of the number of layers are limited according to a value of the data amount or the data ratio. It is also possible that, in transmission to a terminal including four antennas, when a transmission data ratio to the radio station 1 is equal to or lower than 50%, the candidates of the number of layers is limited to 1 and 2 and, when the transmission data ratio to the radio station 1 is larger than 50%, the candidates of the number of layers are limited to 1, 2, 3, and 4, and the terminal determines an actual number of layers in use. Besides, any control method can be adopted as long as the control method has a relation to the data amount and the number of layers. Therefore, a configuration in which the radio station 1 can support a larger number of layers according to an increase in an amount of data transmitted to the radio station 1 is desirable.

As explained above, in the radio communication system according to this embodiment, the associating radio stations and the terminal have a plurality of antennas and perform spatial multiplexing transmission. In this configuration, the terminal station determines, based on a channel state between the terminal and the associating radio stations the number of multiplex (the maximum number of spatially-multiplexed signal) that the associating radio stations are permitted to use. Consequently, it is possible to apply the associated transmission control in the radio communication system explained in the first to eighth embodiments to the MIMO system.

### Tenth Embodiment

In a tenth embodiment, an example of a form of use of the associated transmission disclosed in the first to ninth embodiments is disclosed.

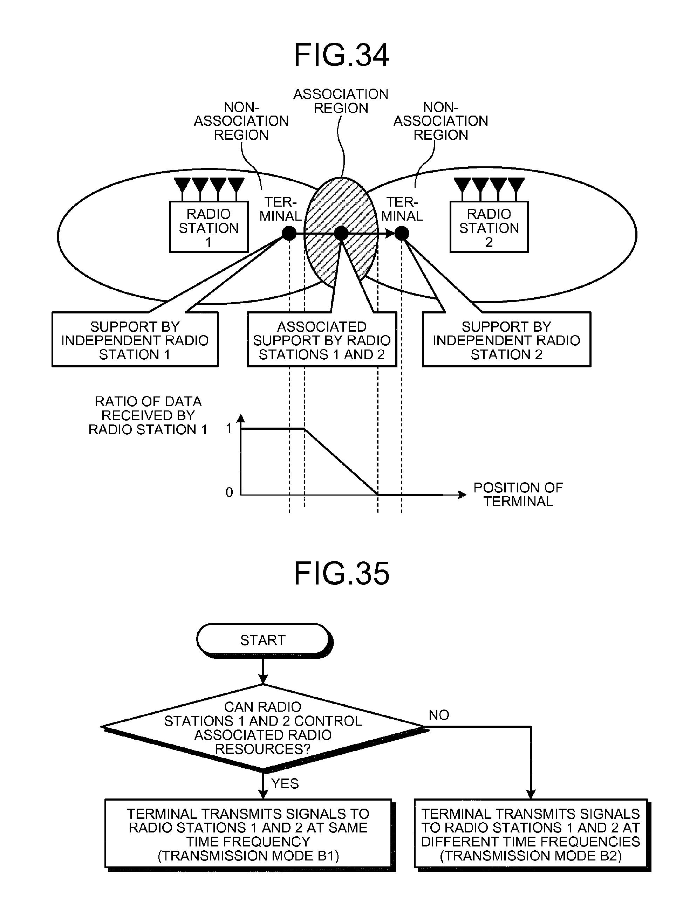

FIG. 34 is a diagram of an exemplar utility form of the associated transmission disclosed in the first to ninth embodiments. In a system configuration shown in FIG. 34, the radio stations 1 and 2 are adjacent to each other. A region where the terminal can communicate with both the radio stations 1 and 2 is an association region and a region where the terminal can communicate with one of the radio stations 1 and 2 is a non-association region. When the terminal is the association region, the radio stations 1 and 2 receive data transmitted from the terminal in association with each other. When the terminal is located in the non-association region, the radio station that supports the non-association region where the terminal is located independently receives data transmitted from the terminal.

It is assumed that the terminal starts movement from a cell of the radio station 1 and moves to a cell of the radio station 2 as shown in the figure. In this case, the terminal moves from an independent support region of the radio station 1 (a non-association region subordinate to the radio station 1) to an independent support region of the radio station 2 through an associated support region by the radio stations 1 and 2. At this point, the associated transmission control explained in the first to ninth embodiments is applied in the associated support region by the radio stations 1 and 2. In such a control, the radio stations 1 and 2 respectively notify the terminal of, as control signals, information indicating independent support and associated support. The terminal recognizes, based on the control signals, whether the independent support is performed or the associated support is performed. When the control signals indicate the independent support, the terminal follows the radio control in the past. On the other hand, when the control signals indicate the associated support, the terminal performs the control operation explained in the first to ninth embodiments.

In the example shown in FIG. 34, when the terminal moves from the cell of the radio station 1 to the cell of the radio station 2, as the position of the terminal comes closer to the radio station 2, a ratio of data received by the radio station 1 is gradually reduced and a ratio of data received by the radio station 2 is gradually increased. This is because, in this control, according to the movement of the terminal, communication quality between the radio station 1 and the terminal is deteriorated and, conversely, communication quality between the radio station 2 and the terminal is improved. In this way, near a cell boundary, the two radio stations that perform associated transmission respectively receive different portions of data and ratios of received data are gradually changed. Therefore, it is possible to smoothly support handover.

In the international standard LTE (Long Term Evolution) in 3GPP (Third Generation Partnership Project), handover between cells is handover for instantaneously performing switching. One radio station (base station) always supports a terminal. In the third generation mobile communication system W-CDMA, soft handover is supported. However, in this system, radio stations transmit the same data. On the other hand, this embodiment is substantially different in that a plurality of radio stations transmit different data portions. Because the different data portions are transmitted, it is possible to realize a larger communication capacity.

When the terminal moves from the cell of the radio station 1 to the cell of the radio station 2, a ratio of data portions received by the radio station 1 is gradually reduced. Consequently, it is possible to realize a new soft handover function in which the radio stations receive different data portions. Such handover is not considered in the mobile communication system in the past.

When the terminal moves in the associated support region, it is also likely that a radio link connection state with one of the radio stations 1 and 2 is suddenly deteriorated. Even in such an environment, if the radio transmission control based on the retransmission control explained in the third embodiment is performed, it is possible to always guarantee communication quality. Therefore, when the retransmission control explained in the third embodiment is applied, even if a propagation state with one radio station suddenly changes, the other radio station supports data reception. Therefore, it is possible to provide a stable service.

As explained above, according to this embodiment, it is possible to realize a radio communication system that supports soft handover of a new type and realize radio communication quality more highly efficiently and stably that in the past.

### Eleventh Embodiment

In an eleventh embodiment, an exemplar utility form of the associated transmission by a plurality of radio stations explained in the first or sixth embodiment is disclosed.

In explanation in the first or sixth embodiment, when the radio stations 1 and 2 perform data reception in association with each other, the terminal can select the transmission mode B for transmitting the same data to the radio stations 1 and 2. However, in the transmission mode B, several modes explained below can be further provided according to an environment.

### Transmission mode B1

The terminal transmits the same data to the associating radio stations at the same time frequency. When the terminal includes a plurality of antennas, the terminal transmits the same data to the associating radio stations at the same time frequency using distributed space-time codes.

### Transmission mode B2

The terminal transmits the same data to the associating radio stations at different time frequencies. When the terminal includes a plurality of antennas, the terminal forms transmission beams respectively at the different time frequencies and transmits the same data to the associating radio stations.

### Transmission mode B3

The terminal applies encoding to the same transmission data using different encoding methods and transmits respective signals (different encoded data) encoded by the different systems to the associating radio stations. The associating radio stations decode the encoded data received from the terminal. There are various methods of applying the different encoding methods. The methods include a method of adding different redundant bits, a method of using different encoding ratios, and a method of performing different convolutional operations.

After the associating radio stations individually receive the data from the terminal, the main radio station performs signal combination such as maximum ratio combination to improve signal quality.

The transmission mode B1 is effective when radio resource allocation is possible in which the associating radio stations associate via a wire network. When the associating radio stations are located in the same position and support areas in different directions, it is also possible to support such associated radio resource control by exchanging dedicated control signals between the radio stations not via the wire network.

On the other hand, the transmission mode B2 is effective when the associated radio resource allocation cannot be performed between the associating radio stations. In this case, the associating radio stations independently give radio resources to the terminal and the terminal individually transmits signals to the associating radio stations.

The transmission mode B3 can be used in an environment same as an environment of the transmission mode B2. Although a computational amount on the reception side (the associating radio stations) is large, a reception characteristic more satisfactory than a reception characteristic in the transmission mode B2 can be obtained because an encoding gain is obtained. Therefore, in an environment in which the associating radio station can allow the computational amount, the transmission mode B3 is a system superior to the transmission mode B2.

Therefore, in the radio communication system according to this embodiment, when the transmission mode B is used, the transmission modes B1 and B2 are adaptively used according to an environment. To realize this configuration, the associating radio stations determine whether associated radio resource control can be performed by exchange of control signals and select the transmission mode B1 or B2 based on the determination. FIG. 35 is a flowchart for explaining a transmission mode selection procedure in the associating radio stations. A transmission mode selection procedure in which the radio stations 1 and 2 are the associating radio stations is shown. First, the radio station 1 or the radio station 2 checks whether the associated radio resource control is possible between the radio station and the other radio station that performs data reception in association with each other. When the associated radio resource control is possible ("Yes"), the radio station 1 or the radio station 2 selects the transmission mode B1. When the associated radio resource control is not possible ("No"), the radio station 1 or the radio station 2 selects the transmission mode B2.

As explained above, an appropriate transmission mode is selected according to whether the associated radio resource control is possible between the associating radio stations. Consequently, it is possible to improve radio transmission efficiency.

### Twelfth Embodiment

In a twelfth embodiment, an operation is explained in detail in which, in a radio communication system in which a plurality of radio stations receive data from a terminal in association with one another, the terminal including a plurality of antennas transmits data to the radio stations that perform associated reception.

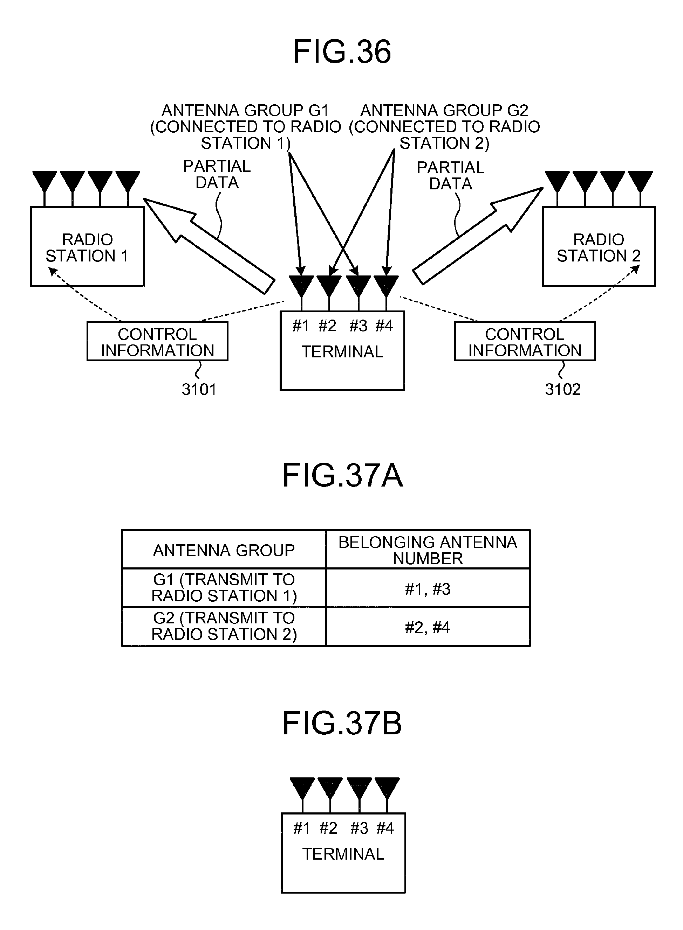

FIG. 36 is a schematic diagram of the configuration and a characteristic operation of the radio communication system according to this embodiment. In this embodiment, the radio communication system includes the radio stations 1 and 2 and a terminal that transmits data to the radio stations. Each of the radio stations 1 and 2 includes a plurality of antennas and the radio stations 1 and 2 receive uplink data from the terminal in association with each other. Each of the radio stations receives the uplink data using a part or all of the antennas (antennas #1 to #4). The terminal transmits the uplink data to the radio stations properly using a plurality of antennas. In this embodiment, an operation in which the transmission mode A (the divided data transmission mode) explained in the embodiments above is used is explained.

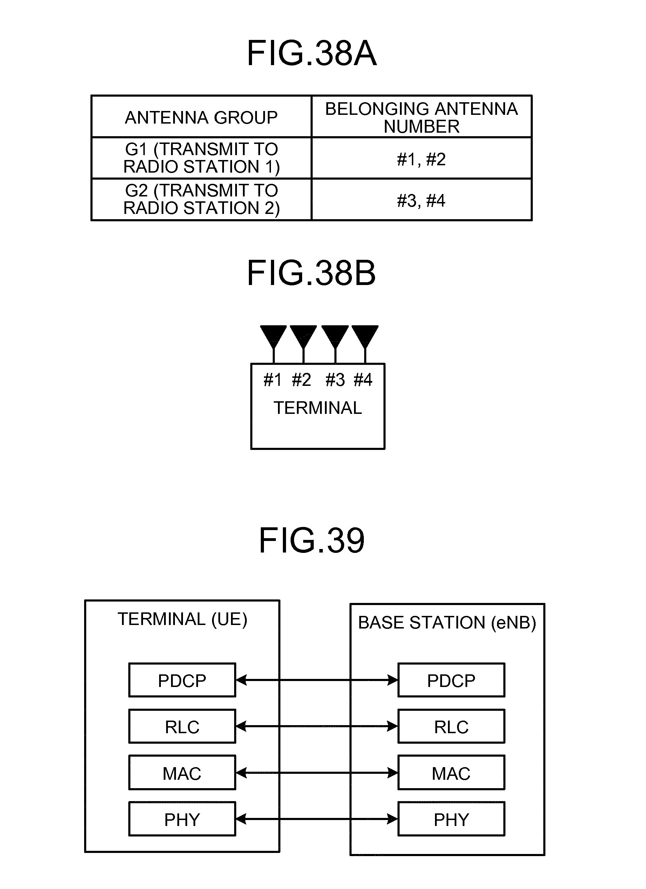

In the MIMO system, a terminal including a plurality of antennas can spatially multiplex a plurality of signals. Therefore, in the radio communication system according to this embodiment, as shown in FIG. 36, the terminal including the plural antennas uses the antennas while classifying the antennas into antenna groups G1 and G2. The terminal transmits a signal from the antennas in the group G1 to the radio station 1 and transmits a signal from the antennas in the antenna group G2 to the radio station G2. As a method of grouping the antennas included in the terminal, a method shown in FIGS. 37A and 37B and a method shown in FIGS. 38A and 38B can be applied.

FIG. 37A is a diagram of an example of a correspondence relation between antennas included in the terminal shown in FIG. 37B and an antenna group to which the antennas belong. The antenna numbers #1 to #4 are numbered such that a combination of the antenna #1 and the antenna #2 has a higher channel correlation than a combination of the antenna #1 and the antenna #3 and a combination of the antenna #1 and the antenna #44. In FIG. 37A, the antennas #1 and #3 are set as one antenna group and the antennas #2 and #4 are set as another antenna group. In this way, when a combination of antennas, antenna numbers of which are apart from each other, (a combination in which a channel correlation between the antennas is as low as possible, in general, a combination in which a distance between the antennas is large) is set as an antenna group, a channel correlation between the antennas is small. Therefore, it is possible to reduce a probability that channels are simultaneously impaired by fading.

FIG. 38A is a diagram of an example of a correspondence relation between the antennas included in the terminal shown in FIG. 38A and the antenna group to which the antennas belong. An example of a combination different from the combination shown in FIG. 37A is shown. In FIG. 38A, the antennas #1 and #2 are set as one antenna group and the antennas #3 and #4 is set as another antenna group. A relation between the antenna numbers and the channel correlation is the same as the relation in the case of FIG. 37A. When the combinations of the antennas having the continuous antenna numbers are set as the antenna groups in this way, there is an advantage that a channel correlation among the antennas are high and a correlation phase among the antennas less easily changes even if movement occurs. Therefore, when this combination is applied, it is possible to increase an update period of a transmission beam or transmission weight used in pre-coding.

As a more desirable form, the antenna group shown in FIG. 37A and the antenna group shown in FIG. 38A can be properly used according to a situation. In this case, for example, the main radio station among the radio stations that perform a reception operation in association with one another (the associating radio stations) determines a setting method for the antenna groups in the terminal (the grouping method shown in FIG. 37A or 38A) and notifies the terminal of a determination result. In this case, the main radio station acquires beforehand, from the terminal, the number of antennas included in the terminal and other information (information necessary in determining an antenna group setting method). Conversely, the terminal can determine an antenna group setting method and notify the associating radio stations of a determination result. As the notification from the terminal to the associating radio stations, the determination result can be directly notified from the terminal to all the associating radio stations or can be notified to the main radio station and re-notified from the main radio station to the sub-radio station. When antenna groups are set (grouped), it is determined according to an environment of use of the antennas (e.g., whether the terminal is moving) whether a channel correlation is desirably set high or low among the antennas.

As shown in FIGS. 36 to 38B, for example, the antennas belonging to the antenna group G1 are used in signal transmission to the radio station 1 and the antennas belonging to the antenna group G2 are used in signal transmission to the radio station 2. When the radio station measures a state (communication quality) of a radio channel used in communication from the terminal to the own station, in most radio communication system, the radio station requests the terminal to transmit a sounding signal (or a known signal) in radio resources determined by the radio station. The terminal transmits the sounding signal (or the known signal) according to the request. In the radio communication system according to this embodiment, when the sounding signal (or the known signal) is transmitted, the antennas belonging to the antenna group G1 transmit the sounding signal to the radio station 1 and the antennas belonging to the antenna group G2 transmit the sounding signal to the radio station 2. The radio station 1 (the radio station 2) measures a channel state concerning the antennas belonging to the antenna group G1 (the antenna group G2) of the terminal using the sounding signal. Further, the radio station 1 (the radio station 2) determines, based on a measurement result of the channel state, transmission beam weight or pre-coding weight of the antennas belonging to the antenna group G1 (the antenna group G2) at the time of transmission of a signal by the terminal and notifies the terminal of the weight information. The terminal determines, based on the notified weight information, the transmission beam weight or the pre-coding weight of the antennas belonging to the antenna group G1 (the antenna group G2), applies weight multiplication to divided data portions (divided data), and transmits data to the radio station 1 (or the radio station 2) .

In this way, in the radio communication system according to this embodiment, the antennas included in the terminal are grouped, the antennas in the same group are set as antennas used in transmission to a certain radio station, and uplink data is transmitted to the radio station. Consequently, it is possible to apply, for each of the antenna groups, multi-antenna transmission control same as the multi-antenna transmission control where associated reception is not performed and transmit data (divided data) to the radio stations (the associating radio stations). For example, it is possible to easily apply, to the antenna groups, signal transmission from multiple antennas in which pre-coding standardized in the international standard 3GPP LTE system or the like is used. Different antennas are used for signal transmission to a plurality of radio stations, whereby it is possible to avoid an environment in which a plurality of signals are multiplex-transmitted by one antenna. When a plurality of signals are multiplex-transmitted, a peak of a signal time waveform substantially fluctuates and is easily affected by nonlinearity of an amplifier. On the other hand, when the different antennas are used for signal transmission to a plurality of radio stations as explained in this embodiment, it is possible to suppress a peak of a time waveform of a transmission signal.

### Thirteenth Embodiment

In a thirteenth embodiment, a configuration for applying the associated transmission controls explained in the first to twelfth embodiments to the international standard 3GPP LTE system is disclosed.

In cellular radio communication, the international standard 3GPP LTE system is often applied. It is important to extend functions while supporting the standard in the past to extend the configuration of the LTE system in the past. Therefore, in this embodiment, a method of smoothly introducing an associating function between radio stations (base stations) into the LTE system is explained.

FIG. 39 is a diagram of a protocol stack of a user plane in the LTE system. The protocol stack is based on a literature '3GPP TS 36.300 V9.2.0 "EUTRA and EUTRAN overall description, Stage 2."'.

In the protocol stack shown in FIG. 39, compression and decompression of a header of an IP packet and encoding of data are performed in a PDCP (Packet Data Convergence Protocol) layer to realize efficient use of bandwidth. Conversion into a data format transmitted on a radio link is performed in a RLC (Radio Link Control) layer. Multiplexing with data of other users is performed in a MAC (Medium Access Control) layer. Processing for generating actual transmission data such as modulation and encoding is performed in a physical (PHY) layer. The transmission data generated in the physical layer is transmitted to the radio link.

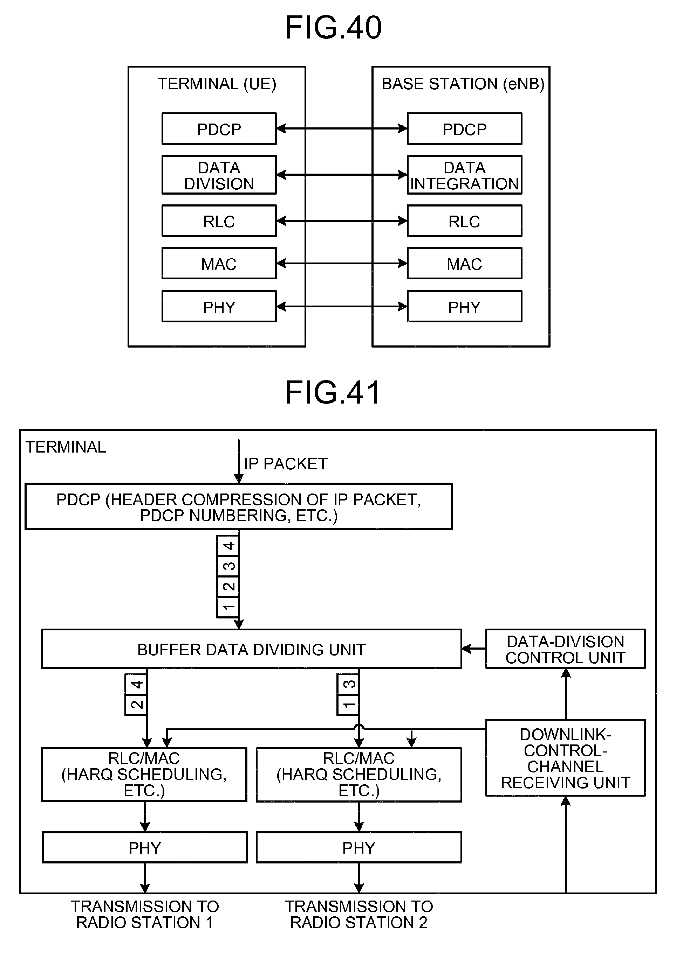

FIG. 40 is a diagram showing a protocol stack for applying the associated transmission controls explained in the first to twelfth embodiments to the 3GPP LTE system. As shown in the figure, a function for performing data division is added anew in a terminal (UE: User Equipment) and a function for combining data is added anew in a base station (eNB: evolved node B), whereby it is possible to support a new associated control function while supporting the functions in the past.

FIG. 41 is a diagram of a configuration example of a terminal that transmits data to base stations included in the radio communication system according to this embodiment. More specifically, a configuration example in which the associated transmission controls explained in the first to twelfth embodiments are applied to the 3GPP LTE system is shown.

The terminal having the configuration shown in FIG. 41 receives, from the application layer, an IP packet to be transmitted to the base stations (a radio station). When the terminal causes a plurality of radio stations to receive the packet in association with one another, the terminal executes header compression for the IP packet, PDCP numbering, and the like in the PDCP layer. Further, the terminal performs buffering of data in a buffer data dividing unit inserted anew, and allocates the data having the PDCP numbers to be transmitted toward associating radio stations (the radio stations 1 and 2 as in the embodiments explained above) to the RLC and MAC layers for the radio stations 1 and 2. The allocated data is transmitted to the associating radio stations in a radio link through the RLC and MAC layers and the PHY layer as in the LTE configuration in the past.

When the data is divided in the buffer data dividing unit, a data-division control unit instructs a dividing method (a division period, a division ratio, etc.). The data-division control unit gives an instruction to the buffer data dividing unit according to a dividing method indicated by control information received from the radio station 1 or 2. When the configuration explained in the sixth embodiment is applied, the data-division control section determines a dividing method based on the control information received from the radio stations 1 and 2.

As explained above, only a function of extracting data of the PDCP numbers, which is necessary in the associated transmission control explained in the embodiments above, is added to the terminal corresponding to the LTE system in the past. Consequently, it is possible to add a base station associating function (an associated transmission function) anew without losing the function of the LTE system in the past. When it is desired to support only the LTE system in the past, the terminal transmits, in the buffer data dividing unit, all PDCP packets to only one low-order layer. When the radio stations 1 and 2 perform the associated reception, the PDCP packets are allocated to a plurality of low-order layers based on the PDCP numbers.

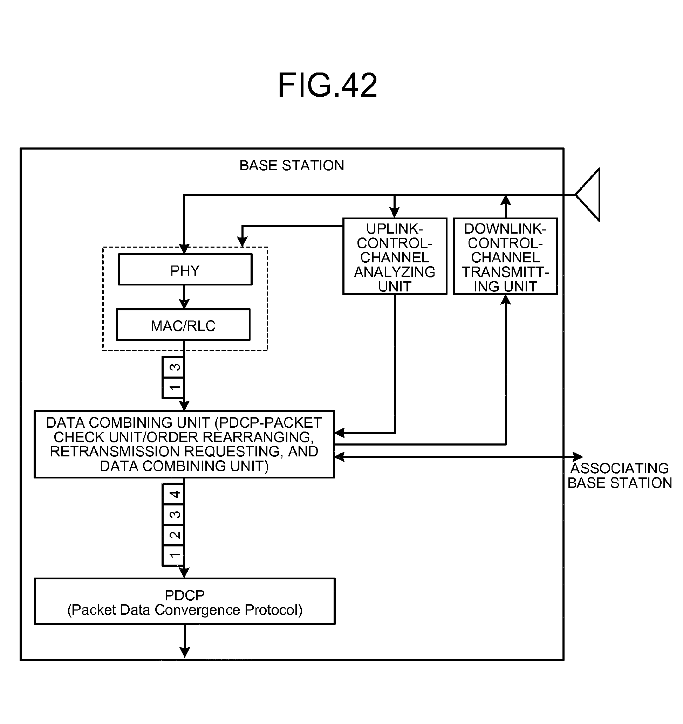

FIG. 42 is a diagram of a configuration example of the base station included in the radio communication system according to this embodiment. A configuration example in which the associated transmission controls explained in the first to twelfth embodiments are applied to the 3GPP LTE system is shown.

Like the terminal of the LTE system in the past, the base station having the configuration shown in FIG. 42 processes, in the PHY layer, the MAC layer, and the RLC layer, a signal received in a radio link. At this point, an uplink-control-channel analyzing unit decodes a control signal transmitted from the terminal and carries out necessary retransmission control and the like in the PHY layer, the MAC layer, and the RLC layer. The PHY layer, the MAC layer, and the RLC layer output, to a data combining unit, data portions transmitted to the base station by the terminal. When the base station is operating as the main radio station explained in the embodiments above, the data portions output from the PHY layer, the MAC layer, and the RLC layer and data portions received by an associating radio station (another radio station operating as a sub-radio station) from the terminal are input to the data combining unit. In this case, the data combining unit checks PDCP packet numbers of the input data portions, rearranges the data portions in number order, and then combines the data portions. On the other hand, when the base station is operating as the sub-radio station, the data combining unit transfers the data portions input from the PHY layer, the MAC layer, and the RLC layer to the main radio station. To perform the retransmission control (the retransmission request) explained in the third embodiment, the data combining unit checks a lack of the PDCP numbers, generates information necessary for the retransmission request, and transmits the information from a downlink-control-channel transmitting unit. Data combined by the data combining unit is transferred to the IP layer through the PDCP layer as in the base station of the LTE system in the past.

As explained above, the data combining unit is added anew to the base station corresponding to the LTE system in the past. Consequently, the base station can support the new base station associating function without losing the function of the LTE system.

As explained above, the radio station (the base station) and the terminal in this embodiment have the functions same as the functions in the past except the functions added anew. It is unnecessary to change the functions. As a result, it is possible to use a manufacturing process same as a manufacturing process of the LTE system. It is possible to realize a reduction in cost from the viewpoint of plant and equipment investment. Further, it is possible to share components with the LTE system in the past. This is beneficial from the viewpoint of mass production.

In terms of performance, even if a propagation state between one base station and the terminal is suddenly deteriorated, the other base station can support signal transmission from the terminal according to the base station associating function. As a result, it is possible to realize signal quality more stable than signal quality of the LTE system in which the terminal is supported by only one base station. In the MIMO system, the base stations and the terminal can respectively establish a plurality of links using satisfactory space channels. As a result, it is possible to improve radio transmission efficiency according to the base station association. In an environment in which one base station can support more terminals, it is possible to support higher transmission speed according to the base station association. In this way, the associated transmission control carried out in the radio communication according to the present invention can substantially contribute to realization of highly efficient radio transmission.

### Fourteenth Embodiment

The associated transmission controls explained in the first to thirteenth embodiments can be used while being combined as appropriate. In a form mainly explained in the first to thirteenth embodiments, one radio station (the main radio station) among the associating radio stations transmits downlink control information from the associating radio station side to the terminal (control information concerning a determination result of a transmission mode, a dividing method, and the like). However, the downlink control information can be transmitted from a plurality of associating radio stations to the terminal.

In the explanation in the first to thirteenth embodiments, the uplink control information from the terminal to the associating radio station is transmitted from the terminal to one radio station (the main radio station) among the associating radio stations. However, the uplink control information can be transmitted from the terminal to a plurality of associating radio stations.

In the main explanation in the first to thirteenth embodiments, the associating radio stations are arranged in different positions. However, the associating radio stations can be arranged in the same position. The associating radio stations can be sectors that support only an area in a specific direction. Therefore, associated reception among the sectors is also included in the present invention.

In the first to thirteenth embodiments, the control system is sometimes explained using "frame". However, any parameter representing time such as "time slot", "sub-frame" "time symbol", and "time sample" can be used. The radio control method is sometimes explained using the term "division ratio". However, any information from which the division ratio can be estimated can be notified instead of directly notifying the division ratio.

### Industrial Applicability

As explained above, the radio communication system according to the present invention is useful as a radio communication system in which a plurality of radio stations receive data transmitted from a terminal in association with one another. In particular, the radio communication system is suitable for a radio communication system that adopts a form in which associating radio stations respectively receive different data portions.

### Reference Signs List

- 1, 2: radio stations
- 61: signal receiving unit
- 62, 78: control-information receiving unit
- 63: transmission-mode selecting unit
- 64: control-information transmitting unit
- 65: buffer data combining unit
- 66: data transmitting unit
- 71: data buffer
- 72: data dividing unit
- 75, 76: weight multiplying units
- 77: control-method determining unit
- 79: known-signal and control-information transmitting unit

## Claims

1. A radio communication system comprising:
a radio station;
a host apparatus configured to subordinate the radio station; and
a terminal configured to communicate with the radio station, wherein
the terminal has a function of transmitting data to the host apparatus through a plurality of the radio stations and, when data is transmitted through the radio stations, executes a first transmitting operation for transmitting different data portions respectively to the radio stations, which are set as transmission destinations, or a second transmitting operation for transmitting same data respectively to the radio stations, which are set as the transmission destinations.

2. The radio communication system according to claim 1, wherein
when data is transmitted to the host apparatus through a plurality of the radio stations, the terminal transmits a signal for channel measurement to the radio stations through which the data addressed to the host apparatus is transmitted, and
a main radio station, which is any one of the radio stations that receive the signal for channel measurement, determines, based on channel measurement results in the radio stations that receive the signal for channel measurement, which of the first and second transmitting operations the main radio station causes the terminal to execute.

3. The radio communication system according to claim 2, wherein, when the main radio station determines that the main radio station causes the terminal to execute the first transmitting operation, the main radio station further determines a ratio of amounts of data that thereafter is received by the radio stations, which receive the signal for channel measurement, from the terminal.

4. The radio communication system according to claim 3, wherein the main radio station periodically determines the ratio again after determining that the main radio station causes the terminal to execute the first transmitting operation and determining the ratio.

5. The radio communication system according to claim 3, wherein the main radio station determines the ratio again for each predetermined number of frames after determining that the main radio station causes the terminal to execute the first transmitting operation and determining the ratio.

6. The radio communication system according to claim 4, wherein, when the main radio station determines the ratio again, the main radio station notifies the terminal of a difference between the ratio determined last time and the radio determined this time.

7. The radio communication system according to claim 3, wherein, in transmitting the data addressed to the host apparatus to the radio stations, the terminal divides the data into a plurality of blocks based on the ratio determined by the main radio station and transmits the blocks to which a series of sequence numbers are granted.

8. The radio communication system according to claim 3, wherein, in transmitting the data addressed to the host apparatus to the radio stations, the terminal divides the data into a plurality of blocks based on the ratio determined by the main radio station and transmits the blocks to which a series of sequence numbers, which are sequential in blocks transmitted to a same radio station, are granted.

9. The radio communication system according to claim 7 or 8, wherein
an LTE system of 3GPP is applied, and
the sequence numbers are PDCP numbers.

10. The radio communication system according to claim 2, wherein
when each of the terminal and the radio stations that receive, from the terminal, the data addressed to the host apparatus includes a plurality of antennas,
when the main radio station determines that the main radio station causes the terminal to execute the first transmitting operation, the main radio station further determines maximum values of numbers of spatially-multiplex respectively used by the radio stations that receive the signal for channel measurement, determines ratios of amounts of data thereafter received by the radio stations from the terminal, and notifies the terminal and the other radio station, which receive the signal for channel measurement, of the determination result using a correspondence table of the maximum values of the numbers of spatially-multiplex and the ratios.

11. The radio communication system according to claim 10, wherein the terminal groups the antennas included in the terminal itself according to a number of the radio stations through which the data is transmitted and uses the antennas while associating, in a one-to-one relation, groups and the radio stations through which the data is transmitted.

12. A terminal apparatus that communication with a radio station subordinate to a host apparatus, the terminal apparatus comprising a data-transmission processing unit configured to transmit data addressed to the host apparatus to one or more radio stations, wherein
when the data is transmitted to the host apparatus through a plurality of the radio stations, the data-transmission processing unit executes a first transmitting operation for transmitting different data portions respectively to the radio stations, through which the data is transmitted, or a second transmitting operation for transmitting same data respectively to the radio stations, through which the data is transmitted.

13. The terminal apparatus according to claim 12, further comprising:
a signal-for-channel-measurement-transmission processing unit configured to transmit, when data is transmitted to the host apparatus through a plurality of the radio stations, a signal for channel measurement to the radio stations through which the data is transmitted; and
a control-method determining unit configured to determine, based on channel measurement results in the radio stations that receive the signal for channel measurement, which of the first and second transmitting operations the control-method determining unit causes the data-transmission processing unit to execute.

14. The terminal apparatus according to claim 13, wherein, when the control-method determining unit determines to cause the data-transmission processing unit to execute the first transmitting operation, the control-method determining unit further determines a ratio of amounts of transmission data to the radio stations, through which the data is transmitted, and notifies at least one of the radio stations of the determined ratio.

15. The terminal apparatus according to claim 14, wherein the control-method determining unit periodically determines the ratio again after determining that the control-method determining unit causes the data-transmission processing unit to execute the first transmitting operation and determining the ratio.

16. The terminal apparatus according to claim 13, wherein the control-method determining unit determines the ratio again for each predetermined number of frames after determining that the control-method determining unit causes the data-transmission processing unit to execute the first transmitting operation and determining the ratio.

17. The terminal apparatus according to claim 15, wherein, when the control-method determining unit determines the ratio again, the control-method determining unit notifies at least one of the radio stations, through which the data is transmitted, of a difference between the ratio determined last time and the radio determined this time.

18. The terminal apparatus according to claim 14, wherein, in transmitting the data addressed to the host apparatus to the radio stations, the data-transmission processing unit divides the data into a plurality of block based on the ratio determined by the control-method determining unit and transmits the blocks to which a series of sequence numbers are granted.

19. The terminal apparatus according to claim 14, wherein, in transmitting the data addressed to the host apparatus to the radio stations, the data-transmission processing unit divides the data into a plurality of block based on the ratio determined by the control-method determining unit and transmits the blocks to which a series of sequence numbers, which are sequential in blocks transmitted to a same radio station, are granted.

20. The terminal apparatus according to claim 18 or 19, wherein the sequence numbers are PDCP numbers defined by an LTE system of 3GPP.

21. The terminal apparatus according to claim 13, wherein
when each of the terminal and the radio stations through which the data is transmitted includes a plurality of antennas,
when the control-method determining unit determines that the control-method determining unit causes the data-transmission processing unit to execute the first transmitting operation, the control-method determining unit further determines maximum values of numbers of spatially-multiplex respectively permitted to be used by the radio stations, through which the data is transmitted, determines ratios of amounts of data thereafter transmitted to the radio stations, and notifies at least one of the radio stations of the determination result using a correspondence table of the maximum values of the numbers of spatially-multiplex and the ratios.

22. The terminal apparatus according to claim 21, wherein the control-method determining unit groups the antennas included in the apparatus itself according to a number of the radio stations through which the data is transmitted and uses the antennas while associating, in a one-to-one relation, groups and the radio stations through which the data is transmitted.
